# EUROPÄISCHE PATENTSCHRIFT

(11) **EP 2 113 523 B1**
(45) Veröffentlichungstag und Bekanntmachung des Hinweises auf die Patenterteilung: **25.06.2014**
(21) Anmeldenummer: 09005459.4
(22) Anmeldetag: 17.04.2009
(51) Int. Cl.: C08G 18/12, C08G 18/08, C08G 18/67, C08G 18/68, C09D 175/14, C08G 18/42, C08G 18/66, C08G 18/72, C08G 18/75, C09D 175/16

(54) **Blockfeste, strahlungshärtbare Beschichtungssysteme auf Basis hochmolekularer, wässriger Polyurethandispersionen**
Solid radiation-hardenable coating systems based on high-molecular aqueous polyurethane dispersions
Systèmes de revêtement non agglomérants et durcissables par rayonnement à base de dispersions de polyuréthane hautement moléculaires aqueuses

(30) Priorität: 28.04.2008 DE 102008021151
(43) Veröffentlichungstag der Anmeldung: 04.11.2009
(73) Patentinhaber: Bayer Intellectual Property GmbH, 40789 Monheim (DE)
(72) Erfinder: Sommer, Stefan, Dr., 51375 Leverkusen (DE); Weikard, Jan, Dr., 51519 Odenthal-Erberich (DE); Luehmann, Erhard, 29699 Bomlitz (DE)
(74) Vertreter: BIP Patents

(56) Entgegenhaltungen:
- EP-A1- 0 872 502
- EP-A1- 0 942 022

## Beschreibung

Die vorliegende Erfindung beschreibt blockfeste, strahlungshärtbare Beschichtungssysteme auf der Basis hochmolekularer, wässriger Polyurethandispersionen, ein Verfahren zu deren Herstellung, die Verwendung der Beschichtungssysteme als Lacke und / oder Klebstoffe sowie Gegenstände und Substrate, versehen mit diesen Lacken und / oder Klebstoffen.

Strahlungshärtbare, wässrige Beschichtungssysteme auf Basis von Polyurethanpolymeren finden Anwendung in der Beschichtung unter anderem von Holz, Kunststoffen und Leder und zeichnen sich durch eine Vielzahl positiver Eigenschaften, wie guter Chemikalienbeständigkeit und mechanische Stabilität, aus. Ein besonderer Vorteil ist die sekundenschnelle Aushärtung der Polyurethandeckschicht durch Quervernetzung der im Polymer enthaltenen ethylenischen Doppelbindungen mit Hilfe energiereicher Strahlung.

Für viele Anwendungen, wie z. B. bei der Holz-/Möbel- oder der Kunststofflackierung, spielt eine starke physikalische Antrocknung nach dem Ablüften des Wassers und vor der Strahlenhärtung eine außerordentlich wichtige Rolle. Substrate, die vor der Strahlenhärtung einen noch klebrigen Filmüberzug haben, können nicht gestapelt werden und schon geringste mechanische Belastungen, wie sie beim Transport in einer Lackiererei vorkommen, hinterlassen auf der Beschichtung Spuren und Beschädigungen. Entsprechend muss der Lackierer für den Transport und die Lagerung beschichteter, aber noch nicht strahlengehärteter Substrate einen hohen Aufwand betreiben und gegebenenfalls Fehlproduktionen in Kauf nehmen.

Bislang bekannte, physikalisch gut trocknende Systeme sind vor der Strahlenhärtung trotzdem noch sehr empfindlich. Dies liegt daran, dass die noch nicht strahlengehärteten Filme durch hohe Luftfeuchtigkeit, wie sie in Lackierereien, die Bindemittel auf Wasserbasis verarbeiten, üblich ist, anquellen und weich werden. Dies führt wiederum dazu, dass die Vorteile der blockfesten Beschichtungen, wie z. B. einfache Handhabung und Lagern in Stapeln, wieder verloren gehen.

Wünschenswert wäre es, nach physikalischer Trocknung blockfeste Beschichtungen zu erhalten, die eine ausreichende Wasserfestigkeit aufweisen, um auch bei hoher Luftfeuchtigkeit blockfest zu bleiben oder im Falle einer unvollständigen Strahlenhärtung beispielsweise an kompliziert geformten Gegenständen wie Stühlen ein bestimmtes Maß an Resistenz zu bieten.

Der Einsatz von solchen Beschichtungssystemen wird die Effizienz des Lackiervorgangs erhöhen und damit Lackierkosten erniedrigen.

Die Anforderungen an moderne Beschichtunssysteme sind sehr vielfältig. So ist es nicht nur von Vorteil, wenn strahlenhärtbare Beschichtungssysteme nach physikalischer Trocknung blockfest sind, vielmehr sollte nach Strahlenhärtung ein Film erhalten werden, der sich durch hohe chemische Beständigkeiten und gute mechanische Belastbarkeit auszeichnet.

In EP-A 753 531 werden Urethanacrylat-Dispersionen auf Basis von hydroxylgruppenhaltigen Polyester- und Polyepoxyarylaten beschrieben. Die hier beschriebenen Filme sind zwar physikalisch trocknend, allerdings zeigen sie keine gute Beständigkeit gegen Wasser vor Strahlenhärtung und haben auch Schwächen gegen Lösungsmittel nach Strahlenhärtung. In der Anmeldung werden keine tri- oder höherfunktionellen Alkohole oder Amine zum Aufbau eines hochmolekularen Polyurethanacrylats und zur gezielten Verbesserung der Blockfestigkeit benutzt.

In EP-A 942 022 werden Urethanacrlyat-Dispersionen auf Basis von hydroxylgruppenhaltigen Polyester-, Polyether- oder Polyurethanacrylaten in Kombination mit Polyepoxyacrylaten beschrieben. Die beschriebenen Beschichtungssysteme führen zu physikalisch trocknenden Klarlacken, die Wasserbeständigkeit vor Strahlenhärtung ist allerdings nicht ausreichend. Zudem führt der Einsatz von Polyepoxyacrylaten aufgrund von aromatischen Bestandteilen zu einer schlechten Witterungsbeständigkeit. Die Verwendung von Polyepoxyacrylaten führt ebenfalls leicht zu einem spröden Film nach Strahlenhärtung und damit zu einer schlechten Haftung auf Kunststoffuntergründen.

Wässrige, strahlungshärtbare Polyurethandispersionen auf der Basis von hydroxylgruppenhaltigen Polyester- und Polyetheracrylaten finden sich in EP-A 872 502. Die Beschichtungssysteme führen zu physikalisch trocknenden Filmen, die eine schlechte Blockfestigkeit aufweisen. Die Beständikgeiten gegen Lösungsmittel sind ebenfalls ungenügend. Der Einsatz tri- oder höherfunktionellen Alkohole oder Amine zur gezielten Verbesserung der Blockfestigkeit wird nicht beschrieben.

Die Aufgabe der vorliegenden Erfindung war es Beschichtungssysteme auf Basis wässriger strahlenhärtender Polyurethandispersionen zur Verfügung zu stellen, die nach physikalischer Trocknung und vor Strahlenhärtung Beschichtungen mit guter Blockfestigkeit ergeben. Diese noch nicht strahlengehärtenden Beschichtungen sollen eine ausreichende Wasserfestigkeit besitzen, damit die Blockfestigkeit auch bei erhöhter Luftfeuchtigkeit erhalten bleibt. Zudem sollten die Filmüberzüge nach Strahlenhärtung mechanisch belastbar und gegenüber Chemikalien sehr resistent sein.

Die Aufgabe wurde gelöst durch die Verwendung tri- und höherfunktioneller Amine und Alkohole zur Herstellung der in den Dispersionen enthaltenen Polyurethane.

Gegenstand der Erfindung sind daher Beschichtungssysteme auf Basis strahlenhärtender, wässriger Polyurethandispersionen enthaltend
I) Polyurethane, erhältlich aus
   A) 40 bis 80 Gew.-% einer hydroxylhaltigen Komponente enthaltend
      A1) 10 bis 80 Gew.-%, bezogen auf die Summe der Komponenten (A) bis (F) und (II), eines oder mehrerer hydroxylgruppenhaltiger Präpolymere, die ausgewählt sind aus der Gruppe bestehend aus Polyester- oder Polyether(meth)acrylaten mit einer OH-Zahl im Bereich von 5 bis 300 mg KOH/g Substanz und Gruppen enthalten, die unter Einwirkung energiereicher Strahlung mit ethylenisch ungesättigten Doppelbindungen unter Polymerisation reagieren,
      A2) 0 bis 50 Gew.-%, bezogen auf die Summe der Komponenten (A) bis (F) und (II), eines oder mehrerer monomerer (Meth)acrylatgruppenhaltiger Alkohole mit einer OH-Zahl im Bereich von 35 bis 1000 mg KOH/g Substanz
   B) 0,1 bis 20 Gew.-% einer oder mehrerer gegenüber Isocyanatgruppen reaktiven Verbindungen, die nichtionische, ionische oder zur Ausbildung von ionischen Gruppen befähigte Gruppen enthalten, die für die Polyurethandispersion dispergierend wirken,
   C) 0,1 bis 30 Gew.-%, einer hydroxyl- und / oder aminhaltigen Komponente enthaltend
      C1) 0,1 bis 10 Gew.-%, bezogen auf die Summe der Komponenten (A) bis (F) und (II), von hydroxy- und / oder aminfunktionellen monomeren Verbindungen mit einer Funktionalität von 3 bis 6 und einem Molekulargewicht im Bereich von 92 bis 254 g/mol
      und / oder
      C2) 0,1 bis 20 Gew.-%, bezogen auf die Summe der Komponenten (A) bis (F) und (II), von hydroxy- und / oder aminfunktionellen Polyestern, C₂-, C₃-, und / oder C₄-Polyethern und Polyetherestern mit einer Funktionalität von 2,3 bis 4,0 und einem Molekulargewicht im Bereich von 238 bis 4000 g/mol.
   D) 0 bis 30 Gew.-% hydroxyfunktionelle Verbindungen ausgewählt aus der Gruppe von Monoalkoholen und / oder Diolen, jeweils mit einem Molekulargewicht im Bereich von 32 bis 118 g/mol, Polyestern, Polycarbonaten, C₂-, C₃-, und / oder C₄-Polyethern, Polyetherestern und Polycarbonatpolyestern mit einer Funktionalität von 1,0 bis 2,0, jeweils mit einem Molekulargewicht im Bereich von 300 bis 4000 g/mol,
   E) 0,1 bis 10 Gew.-% Mono-, Diaminen und / oder difunktionellen Aminoalkoholen, mit
   F) 10 bis 50 Gew.-% eines oder mehrerer Polyisocyanate,
   wobei die Verwendung von Polyepoxy(meth)acrylaten bei der Synthese von (I) ausgeschlossen ist,
   und
II) 0 bis 40 Gew.-% Oligo(meth)acrylate, die ausgewählt sind aus der Gruppe der Komponente (A1) mit einer Doppelbindungsdichte von größer 2,0 mol Doppelbindungen/kg Substanz und durch Einwirkung energiereicher Strahlung mit ethylenisch ungesättigten Verbindungen unter Polymerisation reagieren,
wobei sich die Anteile der Komponenten (A) bis (F) und der Komponente (II) zu 100 Gew.-% addieren, und die in dem Beschichtungssystem enthaltene Mischung aus (I) und (II) ein Gewichtsmittel der Molmasse M_{w} von größer 50000 bis 3000000 g/mol aufweist.

Gegenstand der Erfindung ist darüber hinaus ein Verfahren zur Herstellung der erfmdungsgemäßen Beschichtungssysteme umfassend folgende Schritte:
i) Umsetzung der Komponenten A) bis D) mit Komponente F) zu Polyurethanpräpolymeren
ii) Zumischen der Komponente II
iii) Dispergieren der nach Schritt ii) erhaltenen Mischung in Wasser zu einer wässrigen Polyurethandispersion,
wobei vor, während oder nach der Zumischung der Komponente II, oder vor, während oder nach der Dispergierung die zumindest teilweise Neutralisation der mit Komponente B) gegebenenfalls eingeführten (potentiell) ionischen Gruppen erfolgt und
wobei, zu jedem Zeitpunkt nach Schritt i) möglich, eine Umsetzung der Polyurethanpräpolymeren mit Komponente E erfolgt.

Vorteilhaft ist das erfindungsgemäße Verfahren, wenn die Komponenten (A), (B), (C) und (D) im Reaktor vorgelegt, gegebenenfalls mit einem mit Wasser mischbaren aber gegenüber Isocyanatgruppen inerten Lösungsmittel verdünnt und auf Temperaturen von 30 bis 80 °C aufgeheizt werden, wobei gegebenenfalls zur Mischung der Verbindungen (A), (B), (C) und (D) Isocyanatadditionsreaktionkatalysatoren gegeben werden, bevor der Umsatz mit dem oder den Polyisocyanaten (F) erfolgt, wobei die molaren Verhältnisse von gegenüber Isocyanaten reaktiven Gruppen in (A), (B), (C) und (D) zu Isocyanatgruppen (F) im Bereich von 1 : 0,8 bis 1 : 2,5 liegen und wobei das Polyurethan, erhältlich nach Schritt i), mit den Oligo(meth)acrylaten (II) in Aceton zu einer Oligo(meth)acrylat-Aceton-Lösung gelöst werden und unter starkem Rühren gemäß Schritt iii) entweder in das Dispergierwasser, das das oder die Amine (E) enthält, eingetragen oder umgekehrt die Dispergierwasser-Amin-Mischung zu der Polyurethan-Oligo(meth)acrylat-Aceton-Lösung gegeben wird. Gegebenenfalls wird das Aceton anschließend abdestilliert.

Ein weiterer Gegenstand der Erfindung sind nach physikalischer Trocknung blockfeste, strahlungshärtbare Beschichtungssysteme erhältlich nach dem erfindungsgemäßen Verfahren.

Vorteilhaft ist das Beschichtungssystem, erhältlich nach dem erfindungsgemäßen Verfahren, wenn der Neutralisationsgrad der durch Komponente (B) eingeführten Säuren und / oder Basen zwischen 50% und 125% liegt. Ein Neutralisationsgrad von > 100% bedeutet, dass im Vergleich zur polymergebundenen Säure bzw. Base ein Überschuss an Base bzw. Säure zur Neutralisation verwendet wird.

Vorteilhaft ist das Beschichtungssystem, erhältlich nach dem erfindungsgemäßen Verfahren, wenn die Umsetzung der noch freien Isocyanatgruppen des Präpolymers durch Komponente (E) zu 35% bis 150% erfolgt. In dem Fall, dass ein Unterschuss an Amin (E) eingesetzt wird, reagieren noch freie Isocyanatgruppen langsam mit Wasser ab. Wird ein Überschuss an Amin (E) verwendet, so liegen keine unreagierten Isocyanatgruppen mehr vor und es wird ein aminfunktionelles Polyurethan erhalten.

Vorteilhaft ist das Beschichtungssystem, erhältlich nach dem erfindungsgemäßen Verfahren, wenn 0,1 bis 10 Gew.-% von hydroxy- und / oder aminfunktionellen Verbindungen mit einer Funktionalität von 3 bis 6 und einem Molekulargewicht im Bereich von 92 bis 254 g/mol
und / oder
0,1 bis 20 Gew.-% von hydroxy- und / oder aminfunktionellen Polyestern, Polycarbonaten, C₂-, C₃-, und / oder C₄-Polyethern, Polyetherestern und Polycarbonatpolyestern mit einer Funktionalität von 2,5 bis 4,0 und einem Molekulargewicht im Bereich von 238 bis 4000 g/mol enthalten ist / sind.

Vorteilhaft ist das Beschichtungssystem, erhältlich nach dem erfindungsgemäßen Verfahren, wenn die darin enthaltene Mischung aus (I) und (II) eine Gewichtsmittel der Molmasse M_{w} von bevorzugt 100000 bis 2000000 g/mol, besonders bevorzugt 150000 bis 1000000 g/mol aufweisen.

Vorteilhaft ist das Beschichtungssystem, erhältlich nach dem erfindungsgemäßen Verfahren, wenn die Umsetzung der Polyurethanprepolymeren mit Komponente (E) in acetonischer Lösung vor oder nach der Zugabe der Komponente (II) durchgeführt wird.

Vorteilhaft ist das Beschichtungssystem, erhältlich nach dem erfindungsgemäßen Verfahren, wenn die wässrige Polyurethan-Dispersion mindestens noch einen Initiator und gegebenenfalls weitere Hilfsmittel und Zusatzstoffe enthält, die eine Aushärtung mit energiereicher Strahlung ermöglicht.

Vorteilhaft ist das Beschichtungssystem, erhältlich nach dem erfindungsgemäßen Verfahren, wenn die wässrige Polyurethan-Dispersion weniger als 5 Gew.-% an organischen Lösemitteln enthält.

Ein weiterer Gegenstand der Erfindung ist die Verwendung des Beschichtungssystems erhältlich nach dem erfindungsgemäßen Verfahren zur Herstellung von Klebstoffen und / oder blockfesten Klar- oder pigmentierten Lacken.

Ein weiterer Gegenstand der Erfindung ist die Verwendung des Beschichtungssystems erhältlich nach dem erfindungsgemäßen Verfahren zur Herstellung von Klebstoffen und / oder blockfesten Klar- oder pigmentierten Lacken.

Ein weiterer Gegenstand der Erfindung sind blockfeste Klar- oder pigmentierte Lacke, die ein Beschichtungssystem enthalten, das nach dem erfindungsgemäßen Verfahren erhältlich ist.

Ein weiterer Gegenstand der Erfindung ist ein Klebstoff, der ein Beschichtungssystem enthält, das nach dem erfindungsgemäßen Verfahren erhältlich ist.

Ein weiterer Gegenstand der Erfindung ist die Verwendung des harten Klar- oder pigmentierten Lackes, der ein Beschichtungssystem enthält, das nach dem erfindungsgemäßen Verfahren erhältlich ist, zur Herstellung eines lackierten Substrates.

Ein weiterer Gegenstand der Erfindung ist die Verwendung des Klebstoffes, der ein Beschichtungssystem enthält, das nach dem erfindungsgemäßen Verfahren erhältlich ist, zur Herstellung eines Gegenstandes der aus mindestens zwei oder mehr Materialien aufgebaut ist.

Ein weiterer Gegenstand der Erfindung ist ein Substrat enthaltend einen blockfesten Klar- oder pigmentierten Lack, der ein Beschichtungssystem enthält, das nach dem erfindungsgemäßen Verfahren erhältlich ist.

Vorteilhaft ist das Substrat, enthaltend einen blockfesten Klar- oder pigmentierten Lack, der ein Beschichtungssystem enthält, das nach dem erfindungsgemäßen Verfahren erhältlich ist, wenn das Substrat ausgewählt ist aus der Gruppe von Holz, Holzwerkstoffen, Möbel, Parkett, Türen, Festerrahmen, metallische Gegenstände, Kunststoffe, Papier, Pappe, Kork, mineralischen Substraten, Textilien oder Leder.

Ein weiterer Gegenstand der Erfindung ist ein Gegenstand enthaltend den Klebstoff, der ein Beschichtungssystem enthält, das nach dem erfindungemäßen Verfahren erhältlich ist.

Vorteilhaft ist der Gegenstand, enthaltend den Klebstoff, der ein Beschichtungssystem enthält, das nach dem erfindungsgemäßen Verfahren erhältlich ist, wenn der Gegenstand aus mindestens zwei gleichen und / oder unterschiedlichen Materialien aufgebaut ist, ausgewählt aus der Gruppe von Holz, Holzwerkstoffen, Möbel, Parkett, Türen, Festerrahmen, metallische Gegenstände, Kunststoffe, Papier, Pappe, Kork oder Leder.

Die Komponente (A) enthält eine Komponente (A1) und gegebenenfalls eine Komponente (A2).

Die Komponente (A1) enthält ungesättigte Gruppen enthaltende Oligomere und Polymere. Diese ungesättigte Gruppen enthaltende Oligomere und Polymere sind ausgewählt aus der Gruppe von Polyester(meth)acrylaten, Polyether(meth)acrylaten, Polyetherester(meth)acrylaten, ungesättigten Polyestern mit Allyletherstrukureinheiten und Kombinationen der genannten Verbindungen.

Von den Polyester(meth)acrylaten werden als Komponente (A1) die hydroxylgruppenhaltigen Polyester(meth)acrylate mit einer OH-Zahl im Bereich von 15 bis 300 mg KOH/g Substanz, bevorzugt von 60 bis 200 mg KOH/g Substanz eingesetzt. Bei der Herstellung der hydroxyfunktionellen Polyester(meth)acrylate (A1) können insgesamt 7 Gruppen von Monomerbestandteilen zur Anwendung kommen:
Die erste Gruppe (a) enthält Alkandiole oder Diole oder Gemische dieser. Die Alkandiole weisen ein Molekulargewicht im Bereich von 62 bis 286 g/mol auf. Bevorzugt sind die Alkandiole ausgewählt aus der Gruppe von Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol. Bevorzugte Diole sind Ethersauerstoff-enthaltende Diole, wie Diethylenglykol, Triethylenglykol, Tetraethylenglykol, Dipropylenglykol, Tripropylenglykol, Polyethylen-, Polypropylen- oder Polybutylenglykole mit einem Molekulargewicht im Bereich von von 200 bis 4000, bevorzugt 300 bis 2000, besonders bevorzugt 450 bis 1200 g/mol. Umsetzungsprodukte der zuvor genannten Diole mit ε-Caprolacton oder anderen Lactonen können ebenfalls als Diole zum Einsatz gelangen.

Die zweiter Gruppe (b) enthält drei- und höherwertige Alkohole mit einem Molekulargewicht im Bereich von 92 bis 254 g/mol und / oder auf diesen Alkoholen gestartete Polyether. Besonders bevorzugte drei- und höherwertige Alkohole sind Glycerin, Trimethylolpropan, Pentaerythrit, Dipentaerythrit und Sorbit. Ein besonders bevorzugter Polyether ist das Umsetzungsprodukt von 1 mol Trimethylolpropan mit 4 mol Ethylenoxid.

Die dritte Gruppe (c) enthält Monoalkohole. Besonders bevorzugte Monoalkohole sind ausgewählt aus der Gruppe von Ethanol, 1- und 2-Propanol, 1- und 2-Butanol, 1- Hexanol, 2-Ethylhexanol, Cyclohexanol und Benzylalkohol.

Die vierte Gruppe (d) enthält Dicarbonsäuren mit einem Molekulargewicht im Bereich von 104 bis 600 g/mol und / oder deren Anhydride. Bevorzugte Dicarbonsäuren und deren Anhydride sind ausgewählt aus der Gruppe von Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bemsteinsäureanhydrid, Glutarsäure, Adipinsäure, Pimelinsäure, Korksäure, Sebacinsäure, Dodecandisäure, hydrierte Dimere der Fettsäuren, wie sie unter der sechsten Gruppe (f) aufgelistet sind

Die fünfte Gruppe (e) enthält Trimellithsäure oder Trimellithsäureanhydrid.

Die sechste Gruppe (f) enthält Monocarbonsäuren ausgewählt aus der Gruppe von Benzoesäure, Cyclohexancarbonsäure, 2-Ethylhexansäure, Capronsäure, Caprylsäure, Caprinsäure, Laurinsäure, und natürliche und synthetische Fettsäuren, ausgewählt aus der Gruppe von Laurin-, Myristin-, Palmitin-, Margarin-, Stearin-, Behen-, Cerotin-, Palmitolein, Öl-, Icosen-, Linol-, Linolen- und Arachidonsäure.

Die siebte Gruppe (g) enthält Acrylsäure, Methacrylsäure und / oder dimere Acrylsäure.

Geeignete hydroxylgruppenhaltige Polyester(meth)acrylate (A1) enthalten das Umsetzungsprodukt von mindestens einem Bestandteil aus Gruppe (a) oder (b) mit mindestens einem Bestandteil aus Gruppe (d) oder (e) und mindestens einem Bestandteil aus Gruppe (g).

Besonders bevorzugte Bestandteile aus der Gruppe (a) sind ausgewählt aus der Gruppe von Ethandiol, 1,2- und 1,3-Propandiol, 1,4-Butandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, ausgewählt aus der Gruppe von Diethylenglykol, Triethylenglykol, Tetraethylenglykol, Dipropylenglykol, und Tripropylenglykol. Bevorzugte Bestandteile aus der Gruppe (b) sind ausgewählt aus der Gruppe von Glycerin, Trimethylolpropan, Pentaerythrit oder das Umsetzungsprodukt von 1 mol Trimethylolpropan mit 4 mol Ethylenoxid. Besonders bevorzugte Bestandteile aus den Gruppen (d) bzw. (e) sind ausgewählt aus der Gruppe von Phthalsäureanhydrid, Isophthalsäure, Tetrahydrophthalsäureanhydrid, Hexahydrophthalsäure, Hexahydrophthal-säureanhydrid, Maleinsäureanhydrid, Fumarsäure, Bernsteinsäureanhydrid, Glutarsäure, Adipinsäure, Dodecandisäure, hydrierte Dimere der Fettsäuren, wie sie unter der 6. Gruppe (f) aufgelistet sind und Trimellithsäureanhydrid. Bevorzugter Bestandteil aus der Gruppe (g) ist Acrylsäure.

Gegebenenfalls können in diese Polyester(meth)acrylate auch aus dem Stand der Technik allgemein bekannte, dispergierend wirkende Gruppen eingebaut werden. So können als Alkoholkomponente anteilig Polyethylenglykole und / oder Methoxypolyethylenglykole verwendet werden. Als Verbindungen können auf Alkoholen gestartete Polyethylenglykole, Polypropylenglykole und deren Blockcopolymere sowie die Monomethylether dieser Polyglykole verwendet werden. Besonders geeignet ist Polyethylenglykol-mono-methylether mit einem Molekulargewicht im Bereich von 500-1500 g/mol.

Weiterhin ist es möglich, nach der Veresterung einen Teil der noch freien, nicht veresterten Carboxylgruppen, insbesondere die der (Meth)acrylsäure, mit Mono-, Di- oder Polyepoxiden umzusetzen. Bevorzugt als Epoxide sind die Glycidylether von monomerem, oligomerem oder polymerem Bisphenol-A, Bisphenol-F, Hexandiol und / oder Butandiol oder deren ethoxylierte und / oder propoxylierte Derivate. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen 0 und 20 mg KOH/g, bevorzugt zwischen 0 und 10 mg KOH/g und besonders bevorzugt zwischen 0 und 5 mg KOH/g Substanz. Die Reaktion wird bevorzugt durch Katalysatoren wie Triphenylphosphin, Thiodiglykol, Ammonium- und / oder Phosphoniumhalogeniden und / oder Zirkon- oder Zinnverbindungen wie Zinn(II)ethylhexanoat katalysiert.

Die Herstellung von Polyester(meth)acrylaten wird auf der Seite 3, Zeile 25 bis Seite 6, Zeile 24 der DE-A 4 040 290, auf Seite 5, Zeile 14 bis Seite 11, Zeile 30 der DE-A 3 316 592 und Seite 123 bis 135 von P. K. T. Oldring (Ed.) in Chemistry & Technology of UV & EB Formulations For Coatings, Inks & Paints, Vol. 2, 1991, SITA Technology, London, beschrieben.

Ebenfalls geeignet als Komponente (A1) sind hydroxylgruppenhaltige Polyether(meth)acrylate, die aus der Umsetzung von Acrylsäure und / oder Methacrylsäure mit Polyethern hervorgehen. Die Polyether sind ausgewählt aus der Gruppe von Homo-, Co- oder Blockcopolymerisate von Ethylenoxid, Propylenoxid und / oder Tetrahydrofuran auf beliebigen hydroxy- und / oder aminfunktionellen Startermolekülen ausgewählt aus der Gruppe von Trimethylolpropan, Ethylenglykol, Propylenglykol, Diethylenglykol, Dipropylengykol, Glycerin, Pentaerythrit, Neopentylglykol, Butandiol und Hexandiol.

Komponente (A1) weist bevorzugt neben den ungesättigten Verbindungen noch NCO-reaktive Verbindungen, insbesondere Hydroxylgruppen auf. Über diese Hydroxylgruppen erfolgt ein teilweiser bzw. vollständiger Einbau in das Polyurethangerüst.

Bevorzugte Komponenten (A1) sind Verbindungen ausgewählt aus der Gruppe der Polyester(meth)acrylate, Polyether(meth)acrylate und Polyetherester(meth)acrylate, welche neben den ungesättigten Gruppen noch Hydroxylgruppen aufweisen.

Besonders bevorzugt als Komponente (A1) sind hydroxyfunktionelle Polyester(meth)acrylate und Polyether(meth)acrylate.

Weiterhin können Verbindungen der Komponente (A1) alleine oder in Kombination mit den nachgenannten Verbindungen (A2) eingesetzt werden.

Die Komponente (A2) enthält ein oder mehrere monomere (Meth)acrylatgruppen-haltige Alkohole mit einer OH-Zahl im Bereich von 35-1000 mg KOH/g, bevorzugt mit einer OH-Zahl im Bereich von 130 bis 966 mg KOH/g Substanz. Solche (Meth)acrylatgruppen-halitge Alkohole sind ausgewählt aus der Gruppe von 2-Hydroxyethyl(meth)acrylat, Caprolacton-verlängerte Modifikationen von 2-Hydroxyethyl(meth)acrylat wie Pemcure^{®} 12A (Cognis, DE), 2-Hydroxypropyl(meth)acrylat, 4-Hydroxybutyl(meth)acrylat, 3-Hydroxy-2,2-dimethylpropyl(meth)acrylat, die im Mittel monohydroxyfunktionellen, Di-, Tri-, Tetra- oder Penta(meth)acrylate mehrwertiger Alkohole wie Trimethylolpropan, Glycerin, Pentaerythrit, Ditrimethylolpropan, Dipentaerythrit, ethoxyliertes, propoxyliertes oder alkoxyliertes Trimethylolpropan, Glycerin, Pentaerythrit, Ditrimethylolpropan, Dipentaerythrit oder deren technische Gemische, wobei der Einbau von (A2) in das Additionsprodukt der Komponenten (A), (B), (C), (D) und (F) über noch freie Hydroxyfunktionen erfolgt.

Außerdem können auch Alkohole, die sich aus der Umsetzung von doppelbindungshaltigen Säuren mit gegebenenfalls doppelbindungshaltigen, monomeren Epoxidverbindungen erhalten lassen, als Komponente (A2) eingesetzt werden. Bevorzugte Umsetzungsprodukte sind ausgewählt aus der Gruppe von (Meth)acrylsäure mit Glycidyl(meth)acrylat oder dem Glycidylester tertiärer, gesättigter Monocarbonsäure. Die tertiären, gesättigten Monocarbonsäuren entstammen aus der Gruppe von 2,2-Dimethylbuttersäure, Ethylmethylbutter-, Ethylmethylpentan-, Ethylmethylhexan-, Ethylmethylheptan- und Ethylmethyloktansäure.

Ganz besonders bevorzugt als Komonente A2 sind 2-Hydroxyethyl(meth)acrylat, 2-Hydroxypropyl-(meth)acrylat, Pentaerythrittriacrylat, Dipentaerythritpentaacrylat und das Additionsprodukt aus E-thylmethylheptansäureglycidylester mit (Meth)acrylsäure und deren technische Gemische.

Die Komponente (B) enthält eine oder mehrere gegenüber Isocyanatgruppen reaktiven Verbindungen, die für die wässrige Polyurethandispersion dispergierend wirken. Unter gegenüber Isocyanatgruppen reaktiven Verbindung, die dispergierend wirken, sind Säuren, Basen, ionische Verbindungen und Ethergruppen enthaltende Verbindungen zu verstehen. Bevorzugte Säuren und Basen weisen Gruppen ausgewählt aus der Gruppe von Hydroxyl-, Amino- und Thiolgruppen auf, über die der Einbau in das Reaktionsprodukt der Komponenten (A), (C), (D) und (F) erfolgt und deren isocyanatreaktive Gruppe anschließend in die entsprechenden dispergierend wirkenden Gruppen ausgewählt aus der Gruppe von Sulfonium-, Ammonium-, Carboxylat- und Sulfonat-Salze überführt werden. Besonders bevorzugte Säuren, Basen und ionische Verbindungen sind ausgewählt aus der Gruppe von Mono- und Dihydroxycarbonsäuren, Mono- und Diaminocarbonsäuren, Mono- und Dihydroxysulfonsäuren, Mono- und

Diaminosulfonsäuren, Mono- und Dihydroxyphosphonsäuren, Mono- und Diaminophosphonsäuren und ihre Salze wie Dimethylolpropionsäure, Dimethylolbuttersäure, Hydroxypivalinsäure, N-(2-Aminoethyl)-alanin, 2-(2-Amino-ethylamino)-ethansulfonsäure, Ethylendiamin-propyl- oder butylsulfonsäure, 1,2- oder 1,3-Propylendiamin-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von Isophorondiamin (1-Amino-3,3,5-trimethyl-5-aminomethylcyclohexan oder IPDA) und Acrylsäure (EP-A 916 647, Beispiel 1) und dessen Alkali- oder Ammoniumsalze, das Addukt von Natriumbisulfit an Buten-2-diol-1,4, Polyethersulfonat, das propoxylierte Addukt aus 2-Butendiol und NaHSO₃ wie es in DE-A 2 446 440 auf Seite 5-9, Formel I-III beschrieben ist sowie *N*-Methyl-diethanolamin, über Carboxy- oder Carboxylat- und / oder Sulfonatgruppen und / oder Ammoniumgruppen verfügenden Verbindungen. Besonders bevorzugte ionische Verbindungen sind solche, die Carboxyl- und / oder Sulfonatgruppen als ionische Gruppen enthalten, wie die Salze von 2-(2-Amino-ethylamino-)ethansulfonsäure oder des Additionsproduktes von Isophorondiamin und Acrylsäure (EP 916 647 A1, Beispiel 1) sowie der Dimethylolpropionsäure.

Bevorzugte ethergruppenenthaltende Verbindungen sind ausgewählt aus der Gruppe von mit Alkoholen gestartete Polyethylenglykole, Polypropylenglykole und deren Blockcopolymere sowie die Monomethylether dieser Polyglykole. Bevorzugt sind linear aufgebaute Polyether mit einer Funktionalität zwischen 1 und 3, aber auch Verbindungen der allgemeinen Formel (I), 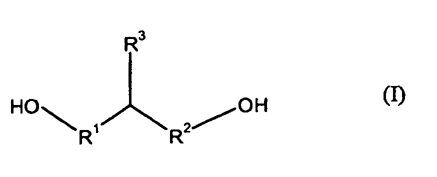 in welcher

R¹ und R² unabhängig voneinander jeweils einen zweiwertigen aliphatischen, cycloaliphatischen oder aromatischen Rest mit 1 bis 18 C-Atomen, die durch Sauerstoff und / oder Stickstoffatome unterbrochen sein können, bedeuten und R³ für einen alkoxyterminierten Polyethylenoxidrest steht.

Bevorzugte Polyether sind ausgewählt aus der Gruppe von einwertigen, im statistischen Mittel 5 bis 70, bevorzugt 7 bis 55 Ethylenoxideinheiten pro Molekül aufweisenden Polyalkylenoxidpolyetheralkoholen, wie sie in an sich bekannter Weise durch Alkoxylierung geeigneter Startermoleküle zugänglich sind und in Ullmanns Encyclopädie der technischen Chemie, 4. Auflage, Band 19, Verlag Chemie, Weinheim Seite 31-38 beschrieben ist.

Dafür bevorzugte Startermoleküle sind ausgewählt aus der Gruppe von gesättigten Monoalkoholen wie Methanol, Ethanol, *n*-Propanol, Isopropanol, *n*-Butanol, Isobutanol, sec-Butanol, die Isomeren Pentanole, Hexanole, Octanole und Nonanole, *n*-Decanol, *n*-Dodecanol, *n*-Tetradecanol, n-Hexadecanol, *n*-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykolmonoalkylethem wie Diethylenglykolmonomethylether, Diethylenglykolmonoethylether, Diethylenglykolmonobutylether, ungesättigten Alkoholen wie Allylalkohol, 1,1-Dimethylallylalkohol oder O-leinalkohol, aromatischen Alkoholen wie Phenol, die isomeren Kresole oder Methoxyphenole, araliphatischen Alkoholen wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und *N*-Ethylcyclohexylamin oder Dicyclohexylamin sowie heterocyclischen, sekundären Aminen wie Morpholin, Pyrrolidin, Piperidin und *1H*-Pyrazol. Besonders bevorzugte Startermoleküle sind ausgewählt aus der Gruppe von gesättigten Monoalkoholen, Diethylenglykolmonomethyl-, -monoethyl- und -monobutylethern. Insbesondere werden Diethylenglykolmonomethyl-, -monoethyl- oder -monobutylether bevorzugt verwendet.

Für die Alkoxylierungsreaktion geeignete Alkylenoxide sind Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol-% Ethylenoxid- und maximal 60 mol-% Propylenoxideinheiten aufweisen.

Die genannten Säuren werden durch Umsetzung mit Neutralisationsmitteln, wie Triethylamin, Ethyldiisopropylamin, Dimethylcyclohexylamin, Dimethylethanolamin, Ammoniak, *N*-Ethylmorpholin, LiOH, NaOH und / oder KOH in die entsprechenden Salze überführt. Der Neutralisationsgrad liegt dabei zwischen 50 und 125%.

Die Komponente (C) enthält eine Komponente (C1) und / oder eine Komponente (C2).

Die Komponente (C1) wird bevorzugt ausgewählt aus der Gruppe von 3 bis 10 Kohlenstoffatome enthaltenden aliphatischen oder cycloaliphatischen Triolen, Tetrolen und Hexolen sowie Triaminen und Tetraaminen. Bevorzugte Triole sind Glycerin, Trimethylolethan, Trimethylolpropan und Trimethylolbutan. Bevorzugte Tetrole sind auszuwählen aus der Gruppe von Pentaerythrit und Di-Trimethylopropan. Bevorzugte Hexole sind Di-Pentaerythrit, Sorbitol, und Hexosen, wie Glucose und Fructose. Bevorzugte Triamine und Tetraamine sind Diethylentriamin und Triethylentetraamin.

Ganz besonders bevorzugt sind die Triole Glycerin und Trimethylolpropan, die Tetrole DiTrimethylolpropan und Pentaerythrit sowie das Hexol Di-Pentaerythrit.

Die Komponente (C2) enthält hydroxy- und / oder aminfunktionellen Polyester, C₂-, C₃-, und / oder C₄-Polyether und Polyetherester mit einer Funktionalität von 2,3 bis 4,0 und einem Molekulargewicht im Bereich von 238 bis 4000 g/mol.

Bevorzugte hydroxyfunktionelle Polyesteralkohole sind solche auf Basis von aliphatischen, cycloaliphatischen und / oder aromatischen Mono-, Di-, Tri- und / oder Polycarbonsäuren mit Mono-, Di-, Tri- und / oder Polyolen. Besonders bevorzugte Polyesteralkohole sind ausgewählt aus der Gruppe der Umsetzungsprodukte von Adipinsäure, Isophthalsäure und Phthalsäureanhydrid mit Trimethylolpropan, Glycerin, Pentaerythrit, Hexandiol, Butandiol, Diethylenglykol, Monoethylenglykol oder Neopentylglykol oder Mischungen der genannten Diole des Molekulargewichts von 300 bis 4000, bevorzugt 300 bis 2500.

Bevorzugte hydroxyfunktionelle Polyetherole sind ausgewählt aus der Gruppe von durch Polymerisation von cyclischen Ethern oder durch Umsetzung von Alkylenoxiden mit einem tri- bis hexafunktionelle Startermolekül, wie unter (C1) aufgezählt, erhältlichen Umsetzungsprodukten. Besonders bevorzugt sind Polyethylen- und / oder Polypropylenglykole eines mittleren Molekulargewichts von 238 bis 4000 g/mol sowie Polytetrahydrofurane mit einem mittleren Molekulargewichts im Bereich von 500 bis 4000 g/mol, bevorzugt von 800 bis 3000 g/mol.

Bei Komponente (D) handelt es sich um hydroxyfunktionelle Verbindungen ausgewählt aus der Gruppe von Monoalkoholen und / oder Diolen jeweils mit einem Molekulargewicht im Bereich von 32 bis 118 g/mol, hydroxyfunktionellen Polyestern, Polycarbonaten, Polyurethanen, C₂ -, C₃ -, und / oder C₄-Polyethern, Polyetherestern, Polycarbonatpolyestern mit einer Funktionalität von 1,0 bis 2,0, jeweils mit einem Molekulargewicht im Bereich von 300 bis 4000 g/mol.

Bevorzugte Diole der Komponente (D) sind ausgewählt aus der Gruppe von 2 bis 20 Kohlenstoffatome enthaltenden aliphatischen, araliphatischen oder cycloaliphatischen Monoalkoholen und / oder Diolen. Monoalkohole sind bevorzugt ausgewählt aus der Gruppe von Methanol, Ethanol, 1-Propanol, 1-Butanol, 1-Pentanol, 1-Hexanol, 2-Propanol, 2-Butanol und 2-Ethylhexanol. Bevorzugte Diole sind ausgewählt aus der Gruppe von Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, 1,3-Butylenglykol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Besonders bevorzugt sind 1,4-Butandiol, 1,4-Cyclohexandimethanol und 1,6-Hexandiol.

Bevorzugte Oligomere bzw. höhermolekulare Diole oder Aminoalkohole mit einem zahlenmittleren Molekulargewicht im Bereich von 300 bis 4000 g/mol, bevorzugt 500 bis 2500 g/mol, wie hydroxyfunktionelle Oligomere bzw. Polymere wie hydroxyfunktionelle Polyester, Polycarbonate, Polyurethane, C2-, C3-, und / oder C4-Polyether, Polyetherester oder Polycarbonatpolyester und weisen eine mittlere Hydroxylfunktionalität von 1,0 bis 2,0 auf.

Bevorzugte hydroxyfunktionelle Polyesteralkohole sind solche auf Basis von aliphatischen, cycloaliphatischen und / oder aromatischen Dicarbonsäuren mit Diolen sowie Polyesteralkohole auf Lacton-Basis. Besonders bevorzugte Polyesteralkohole sind ausgewählt aus der Gruppe der Umsetzungsprodukte von Adipinsäure, Isophthalsäure und Phthalsäureanhydrid mit Hexandiol, Butandiol, Diethylenglykol, Monoethylenglykol oder Neopentylglykol oder Mischungen der genannten Diole des Molekulargewichts von 500 bis 4000, bevorzugt 800 bis 2500.

Bevorzugte hydroxyfunktionelle Polyetherole sind ausgewählt aus der Gruppe von durch Polymerisation von cyclischen Ethern oder durch Umsetzung von Alkylenoxiden mit einem Startermolekül erhältlichen Umsetzungsprodukten. Besonders bevorzugt sind Polyethylen- und / oder Polypropylenglykole eines mittleren Molekulargewichts von 500 bis 4000 g/mol sowie Polytetrahydrofurane mit einem mittleren Molekulargewichts im Bereich von 500 bis 4000 g/mol, bevorzugt von 800 bis 3000 g/mol.

Bevorzugte hydroxyfunktionelle Polycarbonate sind hydroxyl-terminierte Polycarbonate, die durch Umsetzung von Diolen oder auch Lacton-modifizierten Diolen oder auch Bisphenolen ausgewählt aus der Gruppe von Bisphenol A, mit Phosgen oder Kohlensäurediestern wie Diphenylcarbonat oder Dimethylcarbonat zugängliche Polycarbonate, polymeren Carbonate des 1,6-Hexandiols mit einem mittleren Molekulargewichts von im Bereich von 500 bis 4000 g/mol und Carbonate als Umsetzungsprodukte von 1,6-Hexandiols mit ε-Caprolacton im molaren Verhältnis im Bereich von 1 bis 0,1. Besonders bevorzugt sind die vorgenannten Polycarbonatdiole mit einem mittleren Molekulargewicht im Bereich von 800 bis 3000 g/mol auf Basis 1,6-Hexandiol und / oder Carbonate von Umsetzungsprodukten des 1,6-Hexandiols mit ε-Caprolacton im molaren Verhältnis im Bereich von 1 bis 0,33.

Bevorzugt werden auch hydroxylfunktionelle Polyamidalkohole als Komponente (D) eingesetzt.

Besonders bevorzugt als Komponente (D)sind die hydroxyfunktionellen Polyester.

Die Komponente (F) sind Polyisocyanate ausgewählt aus der Gruppe von aromatischen, araliphatischen, aliphatischen oder cycloaliphatischen Polyisocyanaten oder Mischungen solcher Polyisocyanate (F). Bevorzugte Polyisocyanate sind ausgewählt aus der Gruppe von 1,3-Cyclohexandiisocyanat, 1-Methyl-2,4-diisocyanato-cyclohexan, 1-Methyl-2,6-diisocyanato-cydohexan, Tetramethylendiisocyanat, 4,4'-Diisocyanatodiphenylmethan, 2,4'-Diisocyanatodiphenylmethan, 2,4-Diisocyanatotoluol, 2,6-Diisocyanatotoluol, α,α,α,'α,'-Tetra-methyl-*m*- oder *p*-Xylylendiisocyanat, 1,6-Hexamethylendiisocyanat, 1-Isocyanato-3,3,5-trimethyl-5-isocyanatomethylcyclohexan (*Isop*horondi*i*socyanat oder IPDI), 4-Isocyanatomethyl-1,8-octan-diisocyanat (Triisocyanatononan), 4,4'-Diisocyanato-dicyclohexylmethan sowie deren Mischungen, gegebenenfalls auch mit anderen Isocyanaten oder / und höherfunktionellen Homologen bzw. Oligomeren mit Urethan-, Biuret-, Carbodiimid , Isocyanurat-, Allophanat-, Iminooxadiazindion- und / oder Uretdiongruppen.

Bevorzugt enthält die Polyisocyanatkomponente (F) mindestens 60 Gew.-% cycloaliphatischer und / oder aliphatischer, mindestens difunktioneller Isocyanate.

Besonders bevorzugt enthält die Polyisocyanatkomponente (F) 1-Isocyanato-3,3,5-trimethyl-5-isocyanatomethylcyclohexan (Isophorondiisocyanat oder IPDI), 1-Methyl-2,4 / (2,6)-diisocyanatocyclohexan, 4,4'-Diisocyanatodicyclohexylmethan und / oder 1,6-Hexamethylendiisocyanat und/oder deren höherfunktionelle Homologe zw. Oligomere mit Urethan-, Biuret, Carbodiimid , Isocyanurat-, Allophanat-, Iminooxadiazindion- und / oder Uretdiongruppen.

Der Anteil an cycloaliphatischen Polyisocyanaten, wie 1-Isocyanato-3,3,5-trimethyl-5-isocyanatomethylcyclohexan (*I*so*p*horon*d*i*i*socyanat oder IPDI), 1-Methyl-2,4 / (2,6)-diisocyanatocyclohexan und / oder 4,4'-Diisocyanatodicyclohexylmethan, bezogen auf alle in der Polyurethandispersion verwendeten Polyiscocyanate beträgt bevorzugt 50 bis 100 Gew.-%, besonders bevorzugt 70 bis 100 Gew.-%.

Ausgeschlossen von der Verwendung zur Herstellung des Polyurethans (I) sind hydroxylgruppenhaltige Epoxy(meth)acrylate, wie die Umsetzungsprodukte von Diglycidethern mit α ,β-ethylenisch ungesättigten Mono- und/oder Dicarbonsäuren und deren Anhydriden, wie Acrylsäue, Methacrylsäure, Fumarsäure, Maleinsäure, Maleinsäureanhydrid, Crotonsäure, Itaconsäure, u.s.w., wie z.B. in EP-0942022 A beschrieben. Ausgeschlossen sind bevorzugt die Umsetzungsprodukte von Diglycidethern mit Acrylsäure und/oder Methacrylsäure.

Als geeignete Oligo(meth)acrylate (II) sind die Verbindungen der Komponente (A1) zu verstehen, die eine Doppelbindungsdichte größer 2,0 mol Doppelbindungen/kg Substanz, bevorzugt größer 3,0 mol Doppelbindungen/kg Substanz aufweisen. Besonders bevorzugt sind Oligo(meth)acrylate (II) mit einer Doppelbindungsdichte größer 5,0 mol Doppelbindungen/kg Substanz. Die Oligomethacrylate (II) weisen einen bevorzugten OH-Zahlenbereich von 5 bis 150 mg, besonders bevorzugt 15 bis 100 mg, ganz besonders bevorzugt 15 bis 60 mg KOH/g Substanz auf.

Die Komponente (II) ist bevorzugt ausgewählt aus der Gruppe von (Meth)acrylaten von Tetrolen und Hexolen, wie (Meth)acrylate von Pentaerythrit, Ditrimethylolpropan, Dipentaerythrit, Sorbitol, ethoxyliertes, propoxyliertes oder alkoxyliertes Pentaerythrit, Ditrimethylolpropan, Dipentaerythrit, Sorbitol und / oder die bei der (Meth)acrylierung der vorgenannten Verbindungen anfallenden technischen Gemische. Die Oligo(meth)acrylate (II) können auch in Mischungen eingesetzt werden.

Zur Erhöhung der Molmasse werden Mono- und Diamine und / oder mono- oder difunktionelle Aminoalkohole als Komponente (E) verwendet. Bevorzugte Diamine sind solche, die gegenüber den Isocyanatgruppen reaktiver sind als Wasser, da die Verlängerung des Polyesterurethan(meth)acrylats gegebenenfalls im wässrigen Medium stattfindet. Besonders bevorzugt sind die Diamine ausgewählt aus der Gruppe von Ethylendiamin, 1,6-Hexamethylendiamin, Isophorondiamin, 1,3-, 1,4-Phenylendiamin, 4,4'-Diphenylmethandiamin, aminofunktionelle Polyethylenoxide, aminofunktionelle Polypropylenoxide (bekannt unter dem Namen Jeffamin^{®}, D-Reihe [Huntsman Corp. Europe, Zavantem, Belgien]) und Hydrazin. Ganz besonders bevorzugt ist Ethylendiamin.

Bevorzugte Monoamine sind ausgewählt aus der Gruppe von Butylamin, Ethylamin und Amine der Jeffamin^{®} M-Reihe (Huntsman Corp. Europe, Zavantem, Belgien), aminofunktionelle Polyethylenoxide, aminofunktionelle Polypropylenoxide und / oder Aminoalkohole.

Zur Herstellung der erfindungsgemäßen Dispersionen können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden.

Eine Zusammenfassung dieser Methoden findet sich in Methoden der Organischen Chemie, Houben-Weyl, 4. Auflage, Band E20 / Teil 2 auf Seite 1682, Georg Thieme Verlag, Stuttgart, 1987. Bevorzugt ist das Schmelz-Emulgier- und das Aceton-Verfahren. Besonders bevorzugt wird das Aceton-Verfahren.

Zur Herstellung des Reaktionsproduktes nach Schritt i) werden die Komponenten (A), (B), (C) und (D) im Reaktor vorgelegt und gegebenenfalls mit Aceton verdünnt. Zur Beschleunigung der Addition an Isocyanat werden Isocyanatadditionsreaktionkatalysatoren ausgewählt aus der Gruppe von Triethylamin, 1,4-Diazabicyclo-[2,2,2]-oktan, Zinndioktoat oder Dibutylzinndilaurat, zugesetzt, und die Mischung wird erwärmt, um ein Anspringen der Reaktion zu ermöglichen. In der Regel sind dazu Temperaturen von 30 bis 60 °C nötig. Anschließend tropft man das oder die Polyisocyanate (F) zu. Auch die umgekehrte Variante ist möglich, wobei dann die Polyisocyanate (F) vorgelegt und die isocyanatreaktiven Komponenten (A), (B), (C) und (D) zugegeben werden.

Zur Kontrolle der Reaktion wird der NCO-Gehalt in regelmäßigen Abständen über Titration, Infrarot- oder Nahinfrarot-Spektroskopie, bestimmt.

Die molaren Verhältnisse von gegenüber Isocyanaten reaktiven Gruppen in (A), (B), (C) und (D) zu Iscocyanatgruppen in (F) betragen von 1 : 0,8 bis 1 : 2,5, bevorzugt 1 : 1,2 bis 1 : 1,5.

Nach der Herstellung der Herstellung des Produktes nach Schritt i), des erfindungsgemäßen Verfahrens aus den Komponenten (A), (B), (C), (D) und (F) erfolgt, falls dies noch nicht in den Ausgangsmolekülen durchgeführt wurde, die Salzbildung der ionisch dispergierend wirkenden Zentren der Verbindungen (B). Im Fall, dass Komponente (B) saure Gruppen enthält, werden bevorzugt Basen ausgewählt aus der Gruppe von Triethylamin, Ethyldiisopropylamin, Dimethylcyclohexylamin, Dimethylethanolamin, Ammoniak, *N*-Ethylmorpholin, LiOH, NaOH und / oder KOH eingesetzt. Im Fall, dass Komponente (B) basische Gruppen enthält, werden bevorzugt Säuren ausgewählt aus der Gruppe von Milchsäure, Essigsäure, Phosphorsäure, Chlorwasserstoffsäure und / oder Schwefelsäure eingesetzt. Werden als Komponente (B) nur Ethergruppen enthaltende Verbindungen eingesetzt, entfällt dieser Neutralisationsschritt.

Nach dem Schritt i) kommt es zur Zugabe eines Oligo(meth)acrylats (II) oder einer Mischung von Oligo(meth)acrylaten (II). Sobald diese sich gelöst haben, folgt der letzte Reaktionsschritt, bei dem im wässrigen Medium eine Molmassenerhöhung und die Ausbildung der für das erfindungsgemäße Beschichtungssystem benötigten Polyester(meth)acrylaturethan-Dispersionen stattfinden: Das Polyurethan, synthetisiert nach Schritt i) aus den Komponenten (A), (B), (C), (D) und (F), und das oder die Oligo(meth)acrylate (II) gelöst in Aceton werden unter starkem Rühren entweder in das Dispergierwasser, das das oder die Amine (E) enthält, eingetragen oder man rührt umgekehrt die Dispergierwasser-Amin-Mischung zu der Polyurethan-Oligo(meth)acrylat-Aceton-Lösung. Außerdem bilden sich die Dispersionen aus, die im erfindungsgemäßen Beschichtungssystem enthalten sind. Die eingesetzte Menge an Amin (E) hängt von den noch vorhandenen, nicht umgesetzten Isocyanatgruppen ab. Die Umsetzung der noch freien Iscocyanatgruppen mit dem Amin (E) kann zu 35% bis 150% erfolgen. In dem Fall, dass ein Unterschuss an Amin (E) eingesetzt wird, reagieren noch freie Isocyanatgruppen langsam mit Wasser ab. Wird ein Überschuss an Amin (E) verwendet, so liegen keine unreagierten Isocyanatgruppen mehr vor und es wird ein aminfunktionelles Polyurethan erhalten. Bevorzugt werden 80% bis 110%, besonders bevorzugt 90% bis 100% der noch freien Isocyanatgruppen mit dem Amin (E) umgesetzt.

Bevorzugt wird die Umsetzung der Komponenten (A) bis (D) mit (F) am Ende von Schritt i) durch Abkühlen der Reaktionsmischung verlangsamt, bevor bei erniedrigter Temperatur, d.h. bevorzugt bei 30-40 °C, Komponente (II) eingerührt wird (Schritt ii)).

Vorteilhaft ist das Beschichtungssystem, erhältlich nach dem erfindungsgemäßen Verfahren, wenn die Differenz zwischen dem NCO-Gehalt am Ende von Schritt i) und dem theoretisch erreichbaren NCO-Gehalt +2,0 bis -1,0 Gew.-%, bevorzugt 0 bis -0,7 Gew.-%, besonders bevorzugt -0,1 bis -0,5 Gew.-% beträgt. Negative Differenzen bedeuten hierbei, dass der NCO-Gehalt am Ende von Schritt i) unterhalb des theoretischen NCO-Gehaltes liegt.

In einer weiteren Variante ist es möglich, die Molmassenerhöhung durch das Amin (E) bereits in acetonischer Lösung vor oder nach der Zugabe der Oligo(meth)acrylate (II) durchzuführen.

Falls erwünscht, kann das organische Lösungsmittel - sofern vorhanden - abdestilliert werden. Die Dispersionen haben dann einen Festkörpergehalt von 20 bis 60 Gew.-%, insbesondere 30 bis 58 Gew.-%.

Es ist ebenfalls möglich, Dispergier- und Destillationsschritt parallel, das heißt gleichzeitig durchzuführen.

Durch die Zugabe der Oligo(meth)acrylate (II) unmittelbar vor dem Dispergierschritt wird die Komponente (II) mit dem aus den Komponenten (A), (B), (C), (D) und (F) synthetisierten Polyurethan codispergiert. Der Einbau der Oligo(meth)acrylate (II), die Hydroxylgruppen aufweisen können, in das Polyurethangerüst ist nicht gewollt und wird durch die Zugabe kurz vor dem Dispergierschritt unterbunden.

Die erfindungsgemäßen Dispersionen ergeben nach Verdunsten des Wassers klare Filme. Durch anschließende strahlenchemisch und / oder radikalisch induzierte Vernetzung härten die Filme zu besonders hochwertigen, kratzfesten und chemikalienresistenten Lacküberzügen aus.

Zur strahlenchemisch induzierten Polymerisation ist elektromagnetische Strahlung geeignet, deren Energie, gegebenenfalls unter Zusatz von geeigneten Photoinitiatoren, ausreicht, um eine radikalische Polymerisation von (Meth)acrylat-Doppelbindungen zu bewirken.

Bevorzugt erfolgt die strahlenchemisch induzierte Polymerisation mittels Strahlung mit einer Wellenlänge von kleiner 400 nm, wie UV-, Elektronen-, Röntgen- oder Gamma-Strahlen. Besonders bevorzugt ist die UV-Strahlung, wobei die Härtung mit UV-Strahlung in Gegenwart von Fotoinitiatoren ausgelöst wird. Bei den Fotoinitiatoren wird prinzipiell zwischen zwei Typen unterschieden, dem u-nimolekularen (Typ I) und dem bimolekularen (Typ II). Geeignete (Typ I)-Systeme sind aromatische Ketonverbindungen ausgewählt aus der Gruppe von Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide, 2,4,6-Trimethylbenzoyl-diphenylphosphinoxid, Bisacylphosphinoxide, Phenylglyoxylsäureester, Campherchinon, α -Aminoalkylphenone, α,α-Dialkoxyacetophenone und α-Hydroxyalkylphenone. Bevorzugt sind Fotoinitiatoren, die leicht in wässrige Beschichtungsmittel einzuarbeiten sind. Solche Produkte sind beispielsweise Irgacure^{®} 500 (eine Mischung von Benzophenon und (1-Hydroxycyclohexyl)phenylketon, Fa. Ciba, Lampertheim, DE), Irgacure^{®} 819 DW (Phenylbis-(2,4,6-trimethylbenzoyl)-phosphinoxid, Fa. Ciba, Lampertheim, DE), Esacure^{®} KIP EM (Oligo-[2-hydroxy-2-methyl-1-[4-(1-methylvinyl)-phenyl]-propanone], Fa. Lamberti, Aldizzate, Italien). Es können auch Gemische dieser Verbindungen eingesetzt werden.

Zur Einarbeitung der Photoinitiatoren können auch polare Lösemittel, ausgewählt aus der Gruppe von Aceton und Isopropanol, verwendet werden.

Gegebenenfalls wird die UV-Härtung vorteilhaft bei 30-70 °C durchgeführt werden, weil bei höherer Temperatur der Umsetzungsgrad an (Meth)acrylatgruppen tendenziell erhöht ist. Dies kann bessere Beständigkeitseigenschaften zur Folge haben. Es ist bei der UV-Härtung jedoch auch eine mögliche Temperaturempfindlichkeit des Substrats zu berücksichtigen, so dass optimale Härtungsbedingungen für eine bestimmte Beschichtungsmittel-Substrat-Kombination vom Fachmann in einfachen Vorversuchen zu ermitteln sind.

Gegebenenfalls wird unter Inertgasatmosphäre, d. h. unter Sauerstoffausschluss, gehärtet, um eine Inhibierung der radikalischen Vernetzung durch Sauerstoff zu verhindern.

Erfolgt die Härtung thermisch-radikalisch, eignen sich wasserlösliche Peroxide oder wäßrige Emulsionen nicht-wasserlöslicher Initiatoren. Diese Radikalbildner können in bekannter Weise mit Beschleunigern kombiniert werden.

Die erfindungsgemäßen Beschichtungssysteme lassen sich durch die üblichen Techniken auf unterschiedlichste Substrate applizieren, bevorzugt Spritzen, Walzen, Fluten, Drucken, Rakeln, Gießen, Streichen und Tauchen.

Mit den erfindungsgemäßen Beschichtungssystemen können grundsätzlich alle Substrate lackiert bzw. beschichtet werden. Bevorzugte Substrate sind ausgewählt aus der Gruppe bestehend aus mineralischen Untergründen, Holz, Holzwerkstoffen, Möbeln, Parkett, Türen, Fensterrahmen, metallischen Gegenständen, Kunststoffen, Papier, Pappe, Kork, mineralischen Substraten, Textilien oder Leder. Sie eignen sich hierbei als Grundierung und / oder als Decklack. Zusätzlich können die erfmdungsgemäßen Beschichtungssysteme auch in oder als Klebstoffe eingesetzt werden, z. B. in Kontaktklebstoffen, in thermoaktivierbaren Klebstoffen oder in Kaschierklebstoffen.

Die erfindungsgemäßen Beschichtungssysteme können alleine aber auch in Bindemittelmischungen mit anderen Dispersionen eingesetzt werden. Dies können Dispersionen sein, die ebenfalls ungesättigte Gruppen enthalten ausgewählt aus der Gruppe von ungesättigten, polymerisierbaren Gruppen enthaltenden Dispersionen auf Polyester-, Polyurethan-, Polyepoxy(meth)acrylat-, Polyether-, Polyamid-, Polysiloxan-, Polycarbonat-, Epoxyacrylat-, Polymerisat-, Polyesteracrylat-, Polyurethan-Polyacrylat- und / oder Polyacrylatbasis.

Es können auch solche Dispersionen auf Basis von Polyestern, Polyurethanen, Polyethern, Polyamiden, Polyvinylestern, Polyvinylethern, Polysiloxanen, Polycarbonaten, Polymerisaten und / oder Polyacrylaten, in den erfindungsgemäßen Beschichtungssystemen enthalten sein, die funktionelle Gruppen, wie Alkoxysilangruppen, Hydroxygruppen und / oder gegebenenfalls in blockierter Form vorliegende Isocyanatgruppen aufweisen. So können Dual-Cure-Systeme hergestellt werden, die über zwei verschiedene Mechanismen ausgehärtet werden können.

Ebenfalls für Dual-Cure-Systeme können dem erfindungsgemäßen Beschichtungssystem, weiterhin so genannte Vernetzter zugesetzt werden. Es kommen bevorzugt nicht-blockierte und / oder blockierte Polyisocyanate, Polyaziridine, Polycarbodiimide sowie Melaminharze in Frage. Besonders bevorzugt sind nicht-blockierte und / oder blockierte, hydrophilierte Polyisocyanate für wässrige Beschichtungsmittel. Bevorzugt werden ≤ 20 Gew.-%, besonders bevorzugt ≤ 10 Gew.-% an festem Vernetzter auf den Festgehalt des Beschichtungsmittels zugesetzt.

Es können auch Dispersionen auf Basis von auf Polyestern, Polyurethanen, Polyethern, Polyamiden, Polysiloxanen, Polyvinylethern, Polybutadienen, Polyisoprenen, Chlorkautschuken, Polycarbonaten, Polyvinylestern, Polyvinylchloriden, Polymerisaten, Polyacrylaten, Polyurethan-Polyacrylat-, Polyesteracrylat-, Polyetheracrylat-, Alkyd-, Polycarbonat-, Polyepoxy-, Epoxy(meth)acrylatbasis in den erfindungsgemäßen Beschichtungssystemen enthalten sein, die keine funktionellen Gruppen aufweisen. Damit kann der Grad der Vernetzungsdichte reduziert werden, die physikalische Trocknung beeinflusst, z. B. beschleunigt werden, oder eine Elastifizierung bzw. auch eine Haftungsanpassung vorgenommen werden.

Beschichtungsmittel, welche die erfindungsgemäßen Beschichtungssysteme enthalten, können auch Aminovernetzerharze, auf Melamin- oder Harnstoffbasis und / oder Polyisocyanate mit freien oder mit blockierten Polyisocyanatgruppen, auf Basis von gegebenenfalls hydrophilierenden Gruppen enthaltenden Polyisocyanaten aus Hexamethylendiisocyanat, Isophorondiisocyanat und / oder Toluylidendiisocyanat mit Urethan-, Uretdion-, Iminoxadiazindion-, Isocyanurat-, Biuret- und / oder Allophanatstrukturen in den erfindungsgemäßen Beschichtungssystemen zugesetzt sein. Als weitere Vernetzer sind auch Carbodiimide oder Polyaziridine möglich.

Die erfindungsgemäßen Beschichtungssysteme können mit den in der Lacktechnologie bekannten Bindemitteln, Hilfsstoffen und Additiven, ausgewählt aus der Gruppe von Pigmente, Farbstoffe oder Mattierungsmittel versetzt bzw. kombiniert werden. Dies sind Verlaufs- und Benetzungsadditive, Slip-Additive, Pigmente einschließlich Metallic-Effektpigmente, Füllstoffe, Nanopartikel, Lichtschutzpartikel, Anti-Vergilbungsadditive, Verdicker und Additive zur Reduktion der Oberflächenspannung.

Besonders geeignet sind die erfindungsmäßigen Beschichtungssysteme für Holz- und Kunststoffapplikationen mit einem Pigmentgehalt ≥ 10 Gew.-%, bezogen auf die gesamte Formulierung. Sollte es aufgrund von hohen Pigmentgehalten zu einer unvollständigen Reaktion der strahlungshärtbaren Gruppen im Beschichtungssystem während der Strahlungshärtung kommen, so werden blockfeste Beschichtungen erhalten.

Ebenfalls besonders geeignet sind die erfindungsmäßigen Beschichtungssysteme für Holz- und Kunststoffapplikationen auf stark strapazierten Alltagsgegenständen, wie z. B. Mobiltelefongehäuse, bei denen es auf geringe Verkratzbarkeit und gute Beständigkeiten gegen Chemikalien, wie z. B. Sonnencreme, ankommt.

Ebenfalls besonders geeignet sind die erfindungsgemäßen Beschichtungssysteme für die Beschichtung von Folien, wobei zwischen physikalischer Trocknung und UV-Härtung eine Verformung der beschichteten Folie stattfindet.

### Beispiele

Die Messung der Gelpermeationschromatogramme erfolgte auf folgendem System:

| | |
|---|---|
| Pumpe | Hewlett Packard 1100 series II |
| Injektor | Hewlett Packard 1100 series II |
| Säulenofen | VDS-Optilab Jetstream 2 Plus |
| Detektor | Brechungsindex-Detektor, Hewlett Packard 1100 series II |

**Bedingungen:**

| | |
|---|---|
| Säulen | 1. PSS HEMA 40; 50 x 7,8 mm |
| | 2. PSS HEMA 1000; 300 x 7,8 mm |
| | 3. PSS HEMA 300; 300 x 7,8 mm |
| | 4. PSS HEMA 40; 300 x 7,8 mm |
| | 5. PSS HEMA 40; 300 x 7,8 mm |
| Mobile Phase | N,N-Dimethylacetamid |
| Flussrate | 0,6 ml/min |
| Druck | 100 bar |
| Temperatur | 30 °C |
| Injektionsvolumen | 100 µl |
| Probenkonzentration | 13.4 g/l |
| Standard für Molekulargewicht | PSS Polymer-Standard-Service GmbH, Mainz, DE |
| MP [g/mol] | 162; 374; 1620; 9130; 18100; 32500; 67500; 128000; 246000; 659000; 1000000 |

Der NCO-Gehalt wurde jeweils gemäß DIN 53185 titrimetrisch verfolgt.

Der Feststoffgehalt wurde gravimetrisch nach Abdampfen aller nichtflüchtigen Bestandteile gemäß DIN 53216 bestimmt.

Die mittlere Teilchengröße wurde durch Laser-Korrelationsspektroskopie ermittelt.

Die Pendelhärte wurde nach DIN 53157 gemessen.
1) Herstellung einer erfidungsgemäßen, UV-härtbaren, wässrigen Polyurethan-Dispersion zur Verwendung als Bindemittel für blockfeste Lacke 339,9 Teile des Polyesteracrylats Laromer^{®} PE 44 F (OH-Zahl = 80 mg KOH/g Substanz, BASF AG, Ludwigshafen, DE), Komponente (A), 30,3 Teile Dimethylolpropionsäure, Komponente (B), 10,7 Teile Trimethylolpropan, Komponente (C), 199,7 Teile 4,4'-Diisocyanatodicyclohexylmethan, Komponente (F), und 0,6 Teile Dibutylzinndilaurat wurden in 185 Teilen Aceton gelöst und bis zu einem NCO-Gehalt von 1,90 Gew.-% (Theorie 1,72 Gew.-%) bei 60 °C unter Rühren umgesetzt. Der so erhaltenen Präpolymer-Lösung wurden 143,7 Teile des Dipentaerythritpentaacrylats Photomer^{®} 4399 (Cognis AG, Düsseldorf, DE), Komponente (II), zugesetzt und untergerührt. Anschließend erfolgte die Neutralisation durch Zugabe und Unterrühren von 21,0 Teilen Triethylamin. Die klare Lösung wurde unter Rühren in 1080 Teilen Wasser eingetragen. Daraufhin wurde eine Mischung aus 10,2 Teilen Ethylendiamin, Komponente (E), und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 1) mit einem Feststoffgehalt von 40,1 Gew.-%, einer mittleren Teilchengröße von 69 nm und einem pH-Wert von 8,5 erhalten. Das Gelpermeationschromatogramm zeigte ein Gewichtsmittel der Molmasse M_{w} von 7,52*10⁵ g/mol.
2) Herstellung eines trifunktionellen Polyesters 244,6 Teile Trimethylolpropan, 638,1 Teile Tetryhdrophthalsäure und 442,9 Teile Neopentylglykol wurden gemeinsam unter Rühren auf 220 °C aufgeheizt. Diese Temperatur wurde gehalten, bis eine Säurezahl von weniger als 3,0 mg KOH/g Substanz erreicht war. Es wurde ein Polyester mit einer Funktionalität von 3,0 und einer Hydroxylzahl von 250 mg KOH/g Substanz erhalten.
3) Herstellung einer erfindungsgemäßen, UV-härtbaren, wässrigen Polyurethan-Dispersion zur Verwendung als Bindemittel für blockfeste Lacke 339,9 Teile des Polyesteracrylats Laromer^{®} PE 44 F (OH-Zahl = 80 mg KOH/g Substanz, BASF AG, Ludwigshafen, DE), Komponente (A), 40,0 Teile Dimethylolpropionsäure, Komponente (B), 42,2 Teile des trifunktionellen Polyesters aus Beispiel 2), Komponente (C), 199,7 Teile 4,4'-Diisocyanatodicyclohexylmethan, Komponente (F), und 0,6 Teile Dibutylzinndilaurat wurden in 195 Teilen Aceton gelöst und bis zu einem NCO-Gehalt von 1,44 Gew.-% (Theorie 1,62 Gew.-%) bei 60 °C unter Rühren umgesetzt. Der so erhaltenen Präpolymer-Lösung wurden 115,0 Teile des ethoxylierten Pentaerythrittetraacrylats Miramer^{®} 4004 (Rahn AG, Zürich, CH), Komponente (II), zugesetzt und untergerührt. Anschließend erfolgte die Neutralisation durch Zugabe und Unterrühren von 23,6 Teilen Triethylamin. Die klare Lösung wurde unter Rühren in 1085 Teilen Wasser eingetragen. Daraufhin wurde eine Mischung aus 8,0 Teilen Ethylendiamin, Komponente (E), und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 3) mit einem Feststoffgehalt von 38,3 Gew.-%, einer mittleren Teilchengröße von 34 nm und einem pH-Wert von 8,7 erhalten. Das Gelpermeationschromatogramm zeigte ein Gewichtsmittel der Molmasse M_{w} von 6,04*10⁵ g/mol.
4) Herstellung einer erfindungsgemäßen, UV-härtbaren, wässrigen Polyurethan-Dispersion zur Verwendung als Bindemittel für blockfeste Lacke 425,6 Teile des Polyesteracrylats Laromer^{®} PE 44 F (OH-Zahl = 80 mg KOH/g Substanz, BASF AG, Ludwigshafen, DE), Komponente (A), 34,0 Teile Dimethylolpropionsäure, Komponente (B), 3,1 Teilen Diethylentriamin, Komponente (C), 4,8 Teile Neopentylglykol, Komponente (D), 199,7 Teile 4,4'-Diisocyanatodicyclohexylmethan, Komponente (F), und 0,6 Teile Dibutylzinndilaurat wurden in 210 Teilen Aceton gelöst und bis zu einem NCO-Gehalt von 0,92 Gew.-% (Theorie 1,07 Gew.-%) bei 60 °C unter Rühren umgesetzt. Der so erhaltenen Präpolymer-Lösung wurden 118,5 Teile des ethoxylierten Pentaerythrittetraacrylats Miramer^{®} 4004 (Rahn AG, Zürich, CH), Komponente (II), zugesetzt und untergerührt. Anschließend erfolgte die Neutralisation durch Zugabe und Unterrühren von 23,6 Teilen Triethylamin. Die klare Lösung wurde unter Rühren in 1155 Teilen Wasser eingetragen. Daraufhin wurde eine Mischung aus 5,3 Teilen Ethylendiamin, Komponente (E), und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 4) mit einem Feststoffgehalt von 43,8 Gew.-%, einer mittleren Teilchengröße von 55 nm und einem pH-Wert von 8,6 erhalten. Das Gelpermeationschromatogramm zeigte ein Gewichtsmittel der Molmasse M_{w} von 7,51*10⁵ g/mol.
5) Herstellung einer erfindungsgemäßen, UV-härtbaren, wässrigen Polyurethan-Dispersion zur Verwendung als Bindemittel für blockfeste Lacke 339,9 Teile des Polyesteracrylats Laromer^{®} PE 44 F (OH-Zahl = 80 mg KOH/g Substanz, BASF AG, Ludwigshafen, DE), Komponente (A), 34,0 Teile Dimethylolpropionsäure, Komponente (B), 8,2 Teile Trimethylolpropan (Komponente C), 199,7 Teile 4,4'-Diisocyanatodicyclohexylmethan, Komponente (F), und 0,6 Teile Dibutylzinndilaurat wurden in 180 Teilen Aceton gelöst und bis zu einem NCO-Gehalt von 1,80 Gew.-% (Theorie 1,72 Gew.-%) bei 60 °C unter Rühren umgesetzt. Anschließend erfolgte die Neutralisation durch Zugabe und Unterrühren von 23,6 Teilen Triethylamin. Die klare Lösung wurde unter Rühren in 970 Teilen Wasser eingetragen. Daraufhin wurde eine Mischung aus 8,0 Teilen Ethylendiamin, Komponente (E) und 24,0 Teilen Wasser der Dispersion unter Rühren zugesetzt. Im Anschluss wurde das Aceton unter leichtem Vakuum aus der Dispersion abdestilliert. Es wurde eine erfindungsgemäße, UV-härtbare, wässrige Polyurethan-Dispersion 5) mit einem Feststoffgehalt von 40,2 Gew.-%, einer mittleren Teilchengröße von 31 nm und einem pH-Wert von 8,4 erhalten. Das Gelpermeationschromatogramm zeigte ein Gewichtsmittel der Molmasse M_{w} von 3,54*10⁵ g/mol.
6) Herstellung des Polyesteracrylats A1) gemäß Beispiel 1 in EP-B 872 502 224,9 Teile Hexandiol-1,6, 96,6 Teile Trimethylolpropan, 146,0 Teile Adipinsäure, 144,3 Teile Acrylsäure, 3,1 Teile p-Toluolsulfonsäure, 1,7 Teile Hydrochinonmonomethylether, 0,6 Teile 2,6-Di-tert.-Butylkresol und 250 n-Heptan setzte man 10 Stunden bei 96 °C unter Rühren, Rückflusskochen und Wasserabscheiden um. Anschließend wurde das Lösungsmittel abdestilliert Die OH-Zahl betrug 165 mg KOH/g, die Säurezahl 1,0 mg KOH/g und die dynamische Viskosität 520 mPas, gemessen nach DIN 53018 bei 23 °C.
7) Herstellung des Additionsproduktes f1) gemäß Beispiel 1 in EP-B 872 502
   In einem mit Rührer, Thermometer, Tropftrichter, Rückflusskühler und regelbarer Heizung versehenen Reaktionsgefäß wurden 55,0 Teile 2-Hydroxyethylacrylat und 0,06 Teile Dibutylzinnoxid vorgelegt. Unter intensivem Durchleiten von Luft wurde auf 110 °C erhitzt, und es wurden innerhalb von 1 Stunde 45,94 Teile ε-Caprolacton über den Tropftrichter hinzu dosiert. Es wurde noch 3 Stunden unter Rühren auf 110 °C erhitzt, bis eine Viskosität im Bereich von 66-70 sec bei 23 °C (DIN EN ISO 2431) erreicht war.
8) Herstellung einer wässrigen, UV-härtbaren Polyurethan-Dispersion gemäß Beispiel 1 in EP-B 872 502 Zu einem Gemisch aus 200 Teilen des Polyesteracrylats 6), 68,4 Teilen des Additionsproduktes 7), 36,0 Teilen Dimethylolpropionsäure und 23,9 Teilen Triethylamin wurden 214,0 Teilen 1-Isocyanato-3,3,5-trimethyl-5-isocyanatomethylcyclohexan unter Rühren bei Temperaturen von 55 bis 70 °C innerhalb von 3 Stunden zugetropft. Während der Nachreaktion bei der Temperatur von 75 bis 80 °C fiel der NCO-Gehalt auf den konstanten Wert von 2,2 Gew.-%. Anschließend dispergierte man das erhaltene Präpolymer unter starkem Rühren in 749,4 Teilen Wasser bei einer Temperatur von 38 bis 42 °C. Danach wurde die erhaltene Dispersion mit einem Gemisch aus 9,6 Teilen Ethylendiamin und 14,3 Teilen Wasser innerhalb von 15 min. bei gleicher Temperatur tropfenweise versetzt. Danach wurde noch so lange nachgerührt, bis IR-spektroskopisch kein Isocyanat bei 2270 cm⁻¹ mehr nachweisbar war. Es wurde eine UV-härtbare, wässrige Polyurethan-Dispersion 8) gemäß Beispiel 1 in EP-B 872 502 mit einem Feststoffgehalt von 40 Gew.-%, einer mittleren Teilchengröße von 99 nm und einem pH-Wert von 7,6 erhalten. Das Gelpermeationschromatogramm zeigte ein Gewichtsmittel der Molmasse M_{w} von 3,45*10⁴ g/mol.
9) Herstellung einer wässrigen, UV-härtbaren Polyurethan-Dispersion gemäß Beispiel 5 in EP-B 942 022 41,3 Teile des Polyesteracrylats auf Basis Adipinsäure AgiSyn^{®} 720 (OH-Zahl = 116 mg KOH/g Substanz AGI Co., Taipei, Taiwan), 90,1 Teile des Polyepoxyacrylats AgiSyn^{®} 1010 (OH-Zahl = 240 mg KOH/g Substanz, AGI Co., Taipei, Taiwan), 17,1 Teile Dimethylolpropionsäure, 33,6 Teile Hexamethylendiisocyanat, 44,4 Teile 1-Isocyanato-3,3,5-trimethyl-5-isocyanatomethylcyclohexan und 0,24 Teile Dibutylzinndilaurat wurden in 131 Teilen Aceton gelöst und bis zu einem NCO-Gehalt von 1,60 Gew.-% (Theorie 1,25 Gew.-%) bei 60 °C unter Rühren umgesetzt. Anschließend erfolgte die Neutralisation durch Zugabe und Unterrühren von 12,7 Teilen Triethylamin. Die klare Lösung wurde unter Rühren in 500 Teilen Wasser eingetragen. Daraufhin wurde eine Mischung aus 3,6 Teilen Ethylendiamin und 30,0 Teilen Wasser der Dispersion unter Rühren zugesetzt. Im Anschluss wurde das Aceton unter leichtem Vakuum aus der Dispersion abdestilliert. Es wurde eine UV-härtbare, wässrige Polyurethan-Dispersion 9) gemäß Beispiel 5 in EP-B 942 022 mit einem Feststoffgehalt von 32,8 Gew.-%, einer mittleren Teilchengröße von 90 nm und einem pH-Wert von 8,4 erhalten. Das Gelpermeationschromatogramm zeigte ein Gewichtsmittel der Molmasse M_{w} von 9,03*10⁴ g/mol.
10) Herstellung einer wässrigen, UV-härtbaren Polyurethan-Dispersion gemäß Beispiel 2 in EP-B 753 531 150,2 Teile des Polyesteracrylats Laromer^{®} 8800 (OH-Zahl = 70 mg KOH/g Substanz, BASF AG, Ludwigshafen, DE), 15,0 Teile Dimethylolpropionsäure, 24,0 Teile Hexamethylendiisocyanat, 31,7 Teile 1-Isocyanato-3,3,5-trimethyl-5-isocyanatomethylcyclohexan und 0,22 Teile Dibutylzinndilaurat wurden in 129 Teilen Aceton gelöst und bis zu einem NCO-Gehalt von 2,20 Gew.-% (Theorie 1,92 Gew.-%) bei 60 °C unter Rühren umgesetzt. Anschließend erfolgte die Neutralisation durch Zugabe und Unterrühren von 11,2 Teilen Triethylamin. Die klare Lösung wurde unter Rühren in 515 Teilen Wasser eingetragen. Daraufhin wurde eine Mischung aus 3,6 Teilen Ethylendiamin und 30,0 Teilen Wasser der Dispersion unter Rühren zugesetzt. Im Anschluss wurde das Aceton unter leichtem Vakuum aus der Dispersion abdestilliert. Es wurde eine UV-härtbare, wässrige Polyurethan-Dispersion 10) gemäß Beispiel 2 in EP-B 753 531 mit einem Feststoffgehalt von 29,0 Gew.-%, einer mittleren Teilchengröße von 180 nm und einem pH-Wert von 7,7 erhalten. Das Gelpermeationschromatogramm zeigte ein Gewichtsmittel der Molmasse M_{w} von 8,40*10⁴ g/mol.

### Anwendungstechnische Prüfungen

**Tabelle 1: Formulierungen**

| | Klarlacke [1], [2] und [3] [Gewichtsteile] |
|---|---|
| UV-Dispersion (angepasst auf 40% Festkörper) | 98,0 |
| Benetzungsmittel BYK^{®} 348¹ | 1,0 |
| Irgacure^{®} 500² | 1,0 |
| Gesamt | 100,0 |

**Tabelle 2: Applikations- und Härtungsbedingungen**

| | Klarlack [1] | Klarlack [2] | Klarlack [3] |
|---|---|---|---|
| Substrat | Glas | Bayfol³ | Makrofol⁴ |
| Auftrag durch Rakein | Kastenrakel, 1 x 120 µm, Nassfilm | Drahtrakel, 1 x 100 µm, Nassfilm | Drahtrakel, 1 x 100 µm, Nassfilm |
| Entlüftungszeit | 10 min, RT und 30 min, 50 °C | 10 min, RT und 30 min, 50 °C | 10 min, RT und 30 min, 50 °C |
| Härtung | Hg⁵ | Hg⁵ | Hg⁵ |

| | | | |
|---|---|---|---|
| ¹ Lösung eines polyethermodifizierten Polydimethylsiloxans der Fa. BYK, Wesel, DE 2 Einen Mischung aus 50 Gew.-% 1-Hydroxycyclohexylphenylketon und 50 Gew.-% Benzophenon der Fa. Ciba, Lampertheim, DE ³ Technische Folie bestehend aus Polycarbonatblends und ABS der Fa. Bayer MaterialScience AG, Leverkusen, DE ⁴ Technische Folie bestehend aus Polycarbonat der Fa. Bayer MaterialScience AG, Leverkusen, DE ⁵ UV-Anlage der Fa. Cefla, I (ca. 80 W/cm, ca. 1000 mJ/cm²) Nach der UV-Härtung werden die beschichteten Substrate für 16 h bei Raumtemperatur gelagert und anschließend den Prüfungen unterzogen. | | | |

**Tabelle 3a: Daten zur anwendungstechnischen Prüfung**

| | Beispiel | | | |
|---|---|---|---|---|
| Anwendungstechnische Prüfung | | | | |
| | 1 | 3 | 4 | 5 |
| Pendelhärte vor UV-Härtung auf Glas, Klarlack [1] | 25 sec | 24 sec | 46 sec | 28 sec |
| Pendelhärt nach UV-Härtung auf Glas, Klarlack [1] | 147 sec | 164 sec | 176 sec | 171 sec |
| Wasserbeständigkeit vor UV-Härtung auf Bayfol, Klarlack [2] ⁶ | i.O. | i.O. | i.O. | i.O. |
| Wasserbeständigkeit nach UV-Härtung auf Bayfol, Klarlack [2] ⁷ | 100% | 100% | 100% | 100% |
| Wasserbeständigkeit nach UV-Härtung Makrofol, Klarlack [3] ⁷ | 100% | 100% | 100% | 100% |
| Ethanolbeständigkeit, 98%ig, nach UV-Härtung auf Bayfol, Klarlack [2] ⁷ | 100% | 100% | 100% | 100% |
| Ethanolbeständigkeit, 98%ig, nach UV-Härtung auf Makrofol, Klarlack [3] ⁷ | 100% | 100% | 100% | 100% |

**Tabelle 3b: Daten zur anwendungstechnischen Prüfung**

| | Beispiel | | |
|---|---|---|---|
| Anwendungstechnische Prüfung | | | |
| | 8 | 9 | 10 |
| Pendelhärte vor UV-Härtung auf Glas, Klarlack [1] | Klebt | 65 sec | 15 sec |
| Pendelhärt nach UV-Härtung auf Glas, Klarlack [1] | 80 sec | 195 sec | 176 sec |
| Wasserbeständigkeit vor UV-Härtung auf Bayfol, Klarlack [2]⁶ | milchig, weich | stark gequollen | weiß, weich |
| Wasserbeständigkeit nach UV-Härtung auf Bayfol, Klarlack [2]⁷ | 100% | 100% | 100% |
| Wasserbeständigkeit nach UV-Härtung Makrofol, Klarlack [3]⁷ | 100% | 100% | 80% |
| Ethanolbeständigkeit, 98%ig, nach UV-Härtung auf Bayfol, Klarlack [2]⁷ | 60% | 80% | 80% |
| Ethanolbeständigkeit, 98%ig, nach UV-Härtung auf Makrofol, Klarlack [3]⁷ | 60% | 80% | 80% |

| | | | |
|---|---|---|---|
| 6 Die Beständigkeitseigenschaften werden nach 5 Minuten Belastung durch optische Inaugenscheinnahme beurteilt. i.O. bedeutet, dass keine optischen Veränderungen des Films im Vergleich zu vorher zu erkennen sind. 7 Die Beständigkeitseigenschaften werden nach 16 Stunden Belastung durch optische Inaugenscheinnahme beurteilt | | | |

100%: keine sichtbare Beschädigung und keine Filmerweichung 80%: eine leichte optische Veränderung sichtbar, keine Filmerweichung 60%: keine sichtbare Beschädigung, aber Filmerweichung 40%: leichte, sichtbare Beschädigung und Filmerweichung 20%: deutlich sichtbare Beschädigung und Filmerweichung 0%: Oberfläche zerstört

Die erfindungsgemäßen Beispiele 1-4 zeigen nach dem Trocknen und vor der Härtung durch UV-Strahlung bereits klebfreie Oberflächen, die einer Belastung durch Wasser widerstehen. Die Vergleichsbeispiele 8-10 sind vor UV-Härtung - selbst wenn wie bei Beispiel 9 eine sehr hohe Pendelhärte vorliegt - nicht resistent gegen Wasser.

## Patentansprüche

1. Beschichtungssysteme auf Basis strahlenhärtender, wässriger Polyurethandispersionen enthaltend
I) Polyurethane, erhältlich aus
A) 40 bis 80 Gew.% einer hydroxylhaltigen Komponente enthaltend
A1) 10 bis 80 Gew.-%, bezogen auf die Summe der Komponenten (A) bis (F) und (II), eines oder mehrerer hydroxylgruppenhaltiger Präpolymere, die ausgewählt sind aus der Gruppe bestehend aus Polyester- oder Polyether(meth)acrylaten mit einer OH-Zahl im Bereich von 5 bis 300 mg KOH/g Substanz und Gruppen enthalten, die unter Einwirkung energiereicher Strahlung mit ethylenisch ungesättigten Doppelbindungen unter Polymerisation reagieren,
A2) 0 bis 50 Gew.-%, bezogen auf die Summe der Komponenten (A) bis (F) und (II), eines oder mehrerer monomerer (Meth)acrylatgruppenhaltiger Alkohole mit einer OH-Zahl im Bereich von 35 bis 1000 mg KOH/g Substanz
B) 0,1 bis 20 Gew.-% einer oder mehrerer gegenüber Isocyanatgruppen reaktiven Verbindungen, die nichtionische, ionische oder zur Ausbildung von ionischen Gruppen befähigte Gruppen enthalten, die für die Polyurethandispersion dispergierend wirken,
C) 0,1 bis 30 Gew.-%, einer hydroxyl- und / oder aminhaltigen Komponente enthaltend
C1) 0,1 bis 10 Gew.%, bezogen auf die Summe der Komponenten (A) bis (F) und (II), von hydroxy- und / oder aminfunktionellen monomeren Verbindungen mit einer Funktionalität von 3 bis 6 und einem Molekulargewicht im Bereich von 92 bis 254 g/mol
und / oder
C2) 0,1 bis 20 Gew.-%, bezogen auf die Summe der Komponenten (A) bis (F) und (II), von hydroxy- und / oder aminfunktionellen Polyestern, C₂-, C₃-, und / oder C₄-Polyethern und Polyetherestern mit einer Funktionalität von 2,3 bis 4,0 und einem Molekulargewicht im Bereich von 238 bis 4000 g/mol.
D) 0 bis 30 Gew.-% hydroxyfunktionelle Verbindungen ausgewählt aus der Gruppe von Monoalkoholen und / oder Diolen, jeweils mit einem Molekulargewicht im Bereich von 32 bis 118 g/mol, Polyestern, Polycarbonaten, C₂-, C₃-, und / oder C₄-Polyethern, Polyetherestern und Polycarbonatpolyestern mit einer Funktionalität von 1,0 bis 2,0, jeweils mit einem Molekulargewicht im Bereich von 300 bis 4000 g/mol,
E) 0,1 bis 10 Gew.-% Mono-, Diaminen und / oder difunktionellen Aminoalkoholen, mit
F) 10 bis 50 Gew.-% eines oder mehrerer Polyisocyanate,
wobei die Verwendung von Polyepoxy(meth)acrylaten bei der Synthese von (I) ausgeschlossen ist, und
II) 0 bis 40 Gew.% Oligo(meth)acrylate, die ausgewählt sind aus der Gruppe der Komponente (A1) mit einer Doppelbindungsdichte von größer 2,0 mol Doppelbindungen/kg Substanz und durch Einwirkung energiereicher Strahlung mit ethylenisch ungesättigten Verbindungen unter Polymerisation reagieren,
wobei sich die Anteile der Komponenten (A) bis (F) und der Komponente (II) zu 100 Gew.-% addieren, und die in dem Beschichtungssystem enthaltene Mischung aus (I) und (II) ein Gewichtsmittel der Molmasse M_{w} von größer 50000 bis 3000000 g/mol aufweist.

2. Beschichtungssysteme auf Basis strahlenhärtender, wässriger Polyurethandispersionen gemäß Anspruch 1, **dadurch gekennzeichnet , dass** in Komponente (C1) 3 bis 10 Kohlenstoffatome enthaltende aliphatische oder cycloaliphatische Triole, Tetrole, Hexole, Triamine und/oder Tetraamine eingesetzt werden.

3. Beschichtungssysteme auf Basis strahlenhärtender, wässriger Polyurethandispersionen gemäß Anspruch 1, **dadurch gekennzeichnet, dass** in Komponente (C1) Glycerin, Trimethylolethan, Trimethylolpropan, Trimethylolbutan, Pentaerythrit, Di-Trimethylopropan, Di-Pentaerythrit, Sorbitol, Glucose, Fructose, Diethylentriamin und/oder Triethylentetraamin eingesetzt werden.

4. Beschichtungssysteme auf Basis strahlenhärtender, wässriger Polyurethandispersionen gemäß einem der Ansprüche 1 bis 3, **dadurch gekennzeichnet, dass** in Komponente (C2) Polyesteralkohole, ausgewählt aus der Gruppe der Umsetzungsprodukte von Adipinsäure, Isophthalsäure und Phthalsäureanhydrid mit Trimethylolpropan, Glycerin, Pentaerythrit, Hexandiol, Butandiol, Diethylenglykol, Monoethylenglykol oder Neopentylglykol oder Mischungen der genannten Diole.

5. Beschichtungssysteme auf Basis strahlenhärtender, wässriger Polyurethandispersionen gemäß Anspruch 4, **dadurch gekennzeichnet, dass** die Polyesteralkohole ein Molekulargewicht von 300 bis 4000 g/mol aufweisen.

6. Beschichtungssysteme auf Basis strahlenhärtender, wässriger Polyurethandispersionen gemäß einem der Ansprüche 1 bis 3, **dadurch gekennzeichnet, dass** als Komponente (C2) Polyethylenglykole, Polypropylenglykole und/oder Polytetrahydrofurane eingesetzt werden.

7. Beschichtungssysteme auf Basis strahlenhärtender, wässriger Polyurethandispersionen gemäß einem der Ansprüche 1 bis 6, **dadurch gekennzeichnet, dass** die darin enthaltene Mischung aus (I) und (II) eine Gewichtsmittel der Molmasse M_{w} von 100000 bis 2000000 g/mol aufweist.

8. Beschichtungssysteme auf Basis strahlenhärtender, wässriger Polyurethandispersionen gemäß einem der Ansprüche 1 bis 7, **dadurch gekennzeichnet, dass** mindestens noch Initiator und gegebenenfalls weitere Hilfs- und Zusatzstoffe enthalten sind, die eine Aushärtung mit energiereicher Strahlung ermöglichen.

9. Verfahren zur Herstellung der Beschichtungssysteme gemäß einem der Ansprüche 1 bis 8 umfassend folgende Schritte:
i) Umsetzung der Komponenten A) bis D) mit Komponente F) zu Polyurethanpräpolymeren
ii) Zumischen der Komponente II
iii) Dispergieren der nach Schritt ii) erhaltenen Mischung in Wasser zu einer wässrigen Polyurethandispersion,
wobei vor, während oder nach der Zumischung der Komponente II, oder vor, während oder nach der Dispergierung die zumindest teilweise Neutralisation der mit Komponente B) gegebenenfalls eingeführten (potentiell) ionischen Gruppen erfolgt und
wobei, zu jedem Zeitpunkt nach Schritt i) möglich, eine Umsetzung der Polyurethanpräpolymeren mit Komponente E erfolgt.

10. Verfahren gemäß Anspruch 9, **dadurch gekennzeichnet, dass** die Umsetzung der noch freien Isocyanatgruppen der Polyurethanprepolymeren mit Komponente (E) zu 80 bis 110 % erfolgt.

11. Verfahren gemäß Anspruch 9 oder 10, **dadurch gekennzeichnet, dass** die Differenz zwischen dem NCO-Gehalt am Ende von Schritt i) und dem theoretisch erreichbaren NCO-Gehalt +2,0 bis -1,0 Gew.-% liegt.

12. Verwendung der Beschichtungssysteme nach einem der Ansprüche 1 bis 8 zur Herstellung von Klebstoffen oder Lacken.

13. Klebstoffe oder Lacke enthaltend ein Beschichtungssystem gemäß einem der Ansprüche 1 bis 8.

14. Substrate beschichtet mit einem Lack erhältlich unter Verwendung eines Beschichtungssystems gemäß einem der Ansprüche 1 bis 8.

15. Verwendung der Beschichtungssysteme nach einem der Ansprüche 1 bis 8 in Bindemittelmischungen zur Herstellung von Dual-Cure-Sytemen.

## Claims

1. Coating systems based on radiation-curing, aqueous polyurethane dispersions comprising
I) polyurethanes obtainable from
A) 40% to 80% by weight of a hydroxyl-containing component comprising
A1) 10% to 80% by weight, based on the sum of components (A) to (F) and (II), of one or more hydroxyl-containing prepolymers selected from the group consisting of polyester (meth)acrylates or polyether (meth)acrylates having an OH number in the range from 5 to 300 mg KOH/g solids and comprising groups which, on exposure to high-energy radiation, undergo polymerization reaction with ethylenically unsaturated double bonds,
A2) 0% to 50% by weight, based on the sum of components (A) to (F) and (II), of one or more monomeric alcohols containing (meth)acrylate groups and having an OH number in the range from 35 to 1000 mg KOH/g solids,
B) 0.1% to 20% by weight of one or more compounds which are reactive towards isocyanate groups and contain groups which are non-ionic, ionic or capable of forming ionic groups and have a dispersing action for the polyurethane dispersion,
C) 0.1% to 30% by weight of a hydroxyl- and/or amine-containing component comprising
C1) 0.1% to 10% by weight, based on the sum of components (A) to (F) and (II), of hydroxyl- and/or amine-functional monomeric compounds having a functionality of 3 to 6 and a molecular weight in the range from 92 to 254 g/mol
and/or
C2) 0.1% to 20% by weight, based on the sum of components (A) to (F) and (II), of hydroxy- and/or amine-functional polyesters, C₂, C₃ and/or C₄ polyethers and polyetheresters having a functionality of 2.3 to 4.0 and a molecular weight in the range from 238 to 4000 g/mol,
D) 0% to 30% by weight of hydroxyl-functional compounds selected from the group of monoalcohols and/or diols, each with a molecular weight in the range from 32 to 118 g/mol, polyesters, polycarbonates, C₂, C₃, and/or C₄ polyethers, polyetheresters and polycarbonate polyesters having a functionality of 1.0 to 2.0, in each case with a molecular weight in the range from 300 to 4000 g/mol,
E) 0.1% to 10% by weight of monoamines, diamines and/or difunctional amino alcohols, with
F) 10% to 50% by weight of one or more polyisocyanates,
the use of polyepoxy(meth)acrylates in the synthesis of (I) being excluded,
and
II) 0% to 40% by weight of oligo(meth)acrylates selected from the group of component (A1) with a double bond density of more than 2.0 mol of double bonds/kg of solids and, on exposure to high-energy radiation, undergoing polymerization reaction with ethylenically unsaturated compounds,
the fractions of components (A) to (F) and of component (II) adding up to 100% by weight, and the mixture of (I) and (II) that is present in the coating system having a weight-average molar mass M_{W} of greater than 50 000 to 3 000 000 g/mol.

2. Coating systems based on radiation-curing, aqueous polyurethane dispersions according to Claim 1, **characterized in that** in component (C1) aliphatic or cycloaliphatic triols, tetrols, hexols, triamines and/or tetraamines containing 3 to 10 carbon atoms are used.

3. Coating systems based on radiation-curing, aqueous polyurethane dispersions according to Claim 1, **characterized in that** in component (C1) glycerol, trimethylolethane, trimethylolpropane, trimethylolbutane, pentaerythritol, ditrimethylolpropane, dipentaerythritol, sorbitol, glucose, fructose, diethylenetriamine and/or triethylenetetraamine are used.

4. Coating systems based on radiation-curing, aqueous polyurethane dispersions according to any one of Claims 1 to 3, **characterized in that** in component (C2) polyester alcohols selected from the group of the reaction products of adipic acid, isophthalic acid and phthalic anhydride with trimethylolpropane, glycerol, pentaerythritol, hexanediol, butanediol, diethylene glycol, monoethylene glycol or neopentyl glycol or mixtures of the stated diols.

5. Coating systems based on radiation-curing, aqueous polyurethane dispersions according to Claim 4, **characterized in that** the polyester alcohols have a molecular weight of 300 to 4000 g/mol.

6. Coating systems based on radiation-curing, aqueous polyurethane dispersions according to any one of Claims 1 to 3, **characterized in that** as component (C2) polyethylene glycols, polypropylene glycols and/or polytetrahydrofurans are used.

7. Coating systems based on radiation-curing, aqueous polyurethane dispersions according to any one of Claims 1 to 6, **characterized in that** the mixture of (I) and (II) that is present therein has a weight-average molar mass M_{W} of 100 000 to 2 000 000 g/mol.

8. Coating systems based on radiation-curing, aqueous polyurethane dispersions according to any one of Claims 1 to 7, **characterized in that** there are at least initiator and, if desired, further auxiliaries and additives present that allow curing with high-energy radiation.

9. Process for preparing the coating systems according to any one of Claims 1 to 8, comprising the following steps:
i) reacting components A) to D) with component F) to give polyurethane prepolymers,
ii) admixing component II
iii) dispersing the mixture obtained after step ii) in water to give an aqueous polyurethane dispersion,
the (potentially) ionic groups introduced, if appropriate, with component B) being at least partly neutralized before, during or after the admixing of component II, or before, during or after the dispersing, and
the polyurethane prepolymers being reacted with component E at any point in time after step i) that is possible.

10. Process according to Claim 9, **characterized in that** the reaction of the remaining free isocyanate groups of the polyurethane prepolymers with component (E) takes place to an extent of 80% to 110%.

11. Process according to Claim 9 or 10, **characterized in that** the difference between the NCO content at the end of step i) and the theoretically attainable NCO content is +2.0% to -1.0% by weight.

12. Use of the coating systems according to any one of Claims 1 to 8 for producing adhesives or paints.

13. Adhesives or paints comprising a coating system according to any one of Claims 1 to 8.

14. Substrates coated with a paint obtainable using a coating system according to any one of Claims 1 to 8.

15. Use of the coating systems according to any one of Claims 1 to 8 in binder mixtures for producing dual-cure systems.

## Revendications

1. Systèmes de revêtement à base de dispersions de polyuréthane aqueuses, durcissant sous l'effet de rayonnements, contenant
I) des polyuréthanes, pouvant être obtenus à partir de
A) 40 à 80% en poids d'un composant contenant
hydroxyle, contenant
A1) 10 à 80% en poids, par rapport à la somme des composants (A) à (F) et (II), d'un ou de plusieurs prépolymères contenant des groupes hydroxyle, qui sont choisis dans le groupe constitué par les polyester(méth)acrylates ou les polyéther(méth)acrylates présentant un indice d'OH dans la plage de 5 à 300 mg de KOH/g de substance et qui contiennent des groupes qui réagissent en polymérisant sous l'effet d'un rayonnement riche en énergie avec des doubles liaisons éthyléniquement insaturées,
A2) 0 à 50% en poids, par rapport à la somme des composants (A) à (F) et (II), d'un ou de plusieurs alcools monomères contenant des groupes (méth)acrylate présentant un indice d'OH dans la plage de 35 à 1000 mg de KOH/g de substance
B) 0,1 à 20% en poids d'un ou de plusieurs composés réactifs par rapport à isocyanate, qui contiennent des groupes non ioniques, ioniques ou aptes à la formation de groupes ioniques, qui ont un effet dispersant pour la dispersion de polyuréthane,
C) 0,1 à 30% en poids d'un composant contenant
hydroxyle et/ou amine
C₁) 0,1 à 10% en poids, par rapport à la somme des
composants (A) à (F) et (II), de composés monomères à fonctionnalité hydroxy et/ou amino présentant une fonctionnalité de 3 à 6 et un poids moléculaire dans la plage de 92 à 254 g/mole et/ou
C₂) 0,1 à 20% en poids, par rapport à la somme des
composants (A) à (F) et (II), de polyesters à fonctionnalité hydroxy et/ou amine, de polyéthers en C₂, C₃ et/ou C₄ et de polyétheresters présentant une fonctionnalité de 2,3 à 4,0 et un poids moléculaire dans la plage de 238 à 4000 g/mole,
D) 0 à 30% en poids de composés à fonctionnalité hydroxy choisis dans le groupe des monoalcools et/ou des diols, présentant à chaque fois un poids moléculaire dans la plage de 32 à 118 g/mole, des polyesters, des polycarbonates, des polyéthers en C₂, C₃ et/ou C₄, des polyétheresters et des polycarbonate-polyesters présentant une fonctionnalité de 1,0 à 2,0, présentant à chaque fois un poids moléculaire dans la plage de 300 à 4000 g/mole,
E) 0,1 à 10% en poids de monoamines, de diamines et/ou d'aminoalcools difonctionnels, avec
F) 10 à 50% en poids d'un ou de plusieurs
polyisocyanates,
l'utilisation des polyépoxy(méth)acrylates étant exclue lors de la synthèse de (I), et
II) 0 à 40% en poids d'oligo(méth)acrylates, qui sont choisis dans le groupe des composants (A1) présentant une densité de doubles liaisons supérieure à 2,0 moles de doubles liaisons/kg de substance et qui réagissent avec polymérisation sous l'effet d'un rayonnement riche en énergie avec des composés éthyléniquement insaturés,
la somme des proportions de composants (A) à (F) et du composant (II) valant 100% en poids et le mélange obtenu dans le système de revêtement à partir de (I) et (II) présentant une moyenne pondérale de la masse molaire M_{w} supérieure à 50 000 jusqu'à 3 000 000 g/mole.

2. Systèmes de revêtement à base de dispersions de polyuréthane aqueuses, durcissant sous l'effet de rayonnements selon la revendication 1, **caractérisés en ce qu'**on utilise, dans le composant (C1), des triols, tétraols, hexols, triamines et/ou tétraamines aliphatiques ou cycloaliphatiques contenant 3 à 10 atomes de carbone.

3. Systèmes de revêtement à base de dispersions de polyuréthane aqueuses, durcissant sous l'effet de rayonnements selon la revendication 1, **caractérisés en ce qu'**on utilise, dans le composant (C1), du glycérol, du triméthyloléthane, du triméthylolpropane, du triméthylolbutane, du pentaérythritol, du di-triméthylolpropane, du dipentaérythritol, du sorbitol, du glucose, du fructose, de la diéthylènetriamine et/ou de la triéthylènetétraamine.

4. Systèmes de revêtement à base de dispersions de polyuréthane aqueuses, durcissant sous l'effet de rayonnements selon l'une quelconque des revendications 1 à 3, **caractérisés en ce qu'**on utilise, dans le composant (C2) des polyesteralcools, choisis dans le groupe des produits de transformation de l'acide adipique, de l'acide isophtalique et de l'anhydride de l'acide phtalique avec du triméthylolpropane, du glycérol, du pentaérythritol, de l'hexanediol, du butanediol, du diéthylèneglycol, du monoéthylèneglycol ou du néopentylglycol ou des mélanges des diols mentionnés.

5. Systèmes de revêtement à base de dispersions de polyuréthane aqueuses, durcissant sous l'effet de rayonnements selon la revendication 4, **caractérisés en ce que** les polyesteralcools présentent un poids moléculaire de 300 à 4000 g/mole.

6. Systèmes de revêtement à base de dispersions de polyuréthane aqueuses, durcissant sous l'effet de rayonnements selon l'une quelconque des revendications 1 à 3, **caractérisés en ce qu'**on utilise, comme composant (C2), des polyéthylèneglycols, des polypropylèneglycols et/ou des polytétrahydrofurannes.

7. Systèmes de revêtement à base de dispersions de polyuréthane aqueuses, durcissant sous l'effet de rayonnements selon l'une quelconque des revendications 1 à 6, **caractérisés en ce que** le mélange de (I) et (II), qui est contenu dans les systèmes, présente une moyenne pondérale de la masse molaire M_{w} de 100 000 à 2 000 000 g/mole.

8. Systèmes de revêtement à base de dispersions de polyuréthane aqueuses, durcissant sous l'effet de rayonnements selon l'une quelconque des revendications 1 à 7, **caractérisés en ce qu'**ils contiennent au moins encore un initiateur et le cas échéant d'autres adjuvants et additifs, qui permettent un durcissement par un rayonnement riche en énergie.

9. Procédé pour la préparation des systèmes de revêtement selon l'une quelconque des revendications 1 à 8, comprenant les étapes suivantes :
i) transformation des composants A) à D) avec le composant F) en prépolymères de polyuréthane
ii) addition des composants II
iii) dispersion du mélange obtenu après l'étape ii) dans l'eau en une dispersion aqueuse de polyuréthane,
une neutralisation au moins partielle des groupes (potentiellement) ioniques le cas échéant introduits avec le composant B) ayant lieu avant, pendant ou après l'addition du composant II ou avant, pendant ou après la dispersion et une transformation du prépolymère de polyuréthane avec le composant E, qui est possible à tout moment après l'étape i), ayant lieu.

10. Procédé selon la revendication 9, **caractérisé en ce que** la transformation des groupes isocyanate encore libres des prépolymères de polyuréthane avec le composant (E) a lieu à raison de 80 à 110%.

11. Procédé selon la revendication 9 ou 10, **caractérisé en ce que** la différence entre la teneur en NCO à la fin de l'étape i) et la teneur en NCO pouvant être théoriquement atteinte est de +2,0 à -1,0% en poids.

12. Utilisation des systèmes de revêtement selon l'une quelconque des revendications 1 à 8 pour la préparation d'adhésifs ou de laques.

13. Adhésifs ou laques, contenant un système de revêtement selon l'une quelconque des revendications 1 à 8.

14. Substrats revêtus par une laque pouvant être obtenue à l'aide d'un système de revêtement selon l'une quelconque des revendications 1 à 8.

15. Utilisation des systèmes de revêtement selon l'une quelconque des revendications 1 à 8 dans des mélanges de liant pour la préparation de systèmes Dual-Cure (double durcissement).
